# EUROPEAN PATENT SPECIFICATION

(11) **EP 2 432 257 B1**
(45) Date of publication and mention of the grant of the patent: **22.01.2014**
(21) Application number: 11791191.7
(22) Date of filing: 12.04.2011
(51) Int. Cl.: H04W 4/04, H04W 40/12, H04B 7/155

(54) **COMMUNICATION APPARATUS**
KOMMUNIKATIONSGERÄT
APPAREIL DE COMMUNICATION

(30) Priority: 02.07.2010 JP 2010151755; 02.07.2010 JP 2010151752
(43) Date of publication of application: 21.03.2012
(73) Proprietor: Panasonic Corporation, Kadoma-shi Osaka 571-8501 (JP)
(72) Inventor: WATANABE, Takashi, Chuo-ku, Osaka-shi, Osaka 540-6207 (JP); YAMAMOTO, Masahiro, Chuo-ku, Osaka-shi, Osaka 540-6207 (JP); HORIIKE, Yoshio, Chuo-ku, Osaka-shi, Osaka 540-6207 (JP); KOBA, Yasuo, Chuo-ku, Osaka-shi, Osaka 540-6207 (JP)
(74) Representative: Schwabe - Sandmair - Marx
(86) International application number: PCT/JP2011/002166
(87) International publication number: WO 2012/001851

(56) References cited:
- JP-A- 2001 237 764
- JP-A- 2001 237 764
- JP-A- 2002 325 273
- JP-A- 2002 533 692
- US-A1- 2004 166 853
- US-A1- 2009 141 667
- US-B1- 6 745 036

## Description

### Technical Field

The present invention relates to a communication device having a function for selecting another communication device to be connected and searching a communication route.

### Background Art

Conventionally, there is proposed a method of collectively supervising communication routes within a communication system including plural communication devices, in a server located in an uppermost order in the communication system (see e.g., "supervising device 100" in Patent Literature 1). Patent Literature 1 also discloses a method of measuring electric field intensity levels of received signals at communication terminals constituting respective routes of plural communication route candidates and preferentially selecting a communication route having a higher electric field intensity level. Patent Literature 2 discloses a method of determining whether or not to use a response signal based on a response time which passes until the response signal in response to a transmission signal is received, in order to prevent degradation of a communication quality and degradation of a throughput.

However, in the method disclosed in Patent Literature 1, there is a limitation as follows. The communication route cannot be determined (decided) unless all of the communication devices constituting the communication system are installed, or there is a need for an electric field intensity determination means having a wide dynamic range to identify electric field intensity levels of signals received in the respective communication devices. Because of this, it is not easy to construct the communication system, for example, communication robustness cannot be easily ensured in installation of the communication devices.

In the above conventional methods, the communication route is set on the basis of a fixed determination criterion. Therefore, in particular, regarding a communication device installed in a fixed manner, it is only determined whether or not to select that communication device to construct a communication route. For this reason, it is difficult to ensure a robust communication quality when a communication route is constructed using a communication device which is installed in a fixed manner in this way and which appears to make it difficult to ensure a communication quality.

Patent Literature 3 relates to a multi-hop radio network and radio station, which allow each radio station to autonomously construct a start type multi-hop radio network by finding the optimal destination of connection (high order connection destination radio station). In this respect, the number of hop information obtaining means for each radio station obtains the number of hop information from a connectable radio station, and when direct connection to a base station is available, a high order connection destination radio station selecting means selects the base station as a high order connection destination radio station. In other cases, selects one connectable radio station whose number of hops obtained from the number of hop information can be made the minimum as the high order connection destination radio station from among the connectable radio stations. Then, a signal transferring means transfers a transmission signal or a signal received from a slave radio station to the high order connection destination radio station, or when direct connection to the base station is available, transfers the signal to the base station.

Patent Literature 4 relates to a location system for establishing the position of a portable terminal that transmits identity information indicative of the identity of the individual terminal. The portable terminals transmit their identity information at a first predetermined power level. The system includes location beacons having a known position and the beacons are capable of receiving the identity information transmitted by the portable terminals. Each location beacon generates an output signal when identity information of a portable terminal is received at that beacon with a power level greater than a predetermined threshold value, which value may be set independently for each beacon. The output signal is indicative that such a portable terminal is within a particular distance range of the beacon and the output signal is made available to a control unit. By providing the control unit with information relating to the position of each of the location beacons, it is possible to establish the position of a particular portable terminal as being within a given range of that known beacon position when the beacon receives identity information associated with that portable terminal with a power level greater than the beacon threshold value. In one embodiment the portable terminals are DECT handsets.

Patent Literature 5 relates to a multi-hop communication system which is configured by a radio control station connected to a core network, and radio stations. The radio control station has a control signal TX/RX unit which transmits/receives the control signal, an information signal TX/RX unit which transmits/receives the information signal, and a communication channel controller which transmits a "usage notification" indicating usage of communication channels managed by the radio control station to the radio stations using the control signal. The radio station has a control signal TX/RX unit which transmits/receives the control signal, and an information signal TX/RX unit which transmits/receives the information signal.

Patent Literature 6 relates to a method for routing a message in a wireless network based on relay probability. The method allows dynamic delivery of a message by calculating the relay probability of each node for message transmission, measuring the strength of a beacon signal received from a destination node, and determining a node that will relay a message based on the relay probability and the strength of beacon signal.

### Citation Lists

### Patent Literature

Patent Literature 1: Japanese Laid-Open Patent Application Publication No. Hei. 11-168526
Patent Literature 2: Japanese Laid-Open Patent Application Publication No. 2007-335994
Patent Literature 3: JP 2001 237764 A
Patent Literature 4: US-6,745,036 B1
Patent Literature 5: US-2004/166853 A1
Patent Literature 6: US-2009/141667 A1

### SUMMARY OF THE INVENTION

The invention is defined by the subject-matter of independent claim 1. The dependent claims are directed to advantageous embodiments.

### ADVANTAGES OF THE INVENTION

Advantageously a communication device comprises a reception means which receives signals transmitted from plural upper terminals; a signal level calculator means which calculates received signal levels of the signals transmitted from the upper terminals and received in the reception means; and a processing means which determines an upper terminal as a target connected to the communication device, from among the plural upper terminals, characterized in that; the processing means is configured to determine the upper terminal as the target connected to the communication device, based on the received signal levels of the upper terminals which are calculated in the signal level calculator means and information relating to communication environments of the upper terminals.

The processing means may obtain information relating to the number of lower terminals connected to the upper terminals, as the upper terminal information, based on the signals transmitted from the upper terminals and received in the reception means; and the processing means may be configured to determine an upper terminal being smallest in the number of the lower terminals connected to said upper terminal, as the target connected to the communication device, said upper terminal being selected from among upper terminals in which received signal levels calculated in the signal level calculator means are not lower than a predetermined threshold.

In other words, an advantageous communication device comprises a reception means which receives signals transmitted from plural upper terminals; a signal level calculator means which calculates received signal levels of the signals transmitted from the upper terminals and received in the reception means; and a processing means which determines an upper terminal as a target connected to the communication device, from among the plural upper terminals, wherein the processing means may obtain information relating to the number of lower terminals connected to the upper terminals, based on the signals transmitted from the upper terminals and received in the reception means; and the processing means may be configured to determine an upper terminal being smallest in the number of the lower terminals connected to said upper terminal, as the target connected to the communication device, said upper terminal being selected from among upper terminals in which received signal levels calculated in the signal level calculator means are not lower than a predetermined threshold.

In such a configuration, even in a state where all of the communication devices constituting the communication system are not installed, it is possible to construct a communication route between the communication device itself and a communication device which is in a one-level upper order of itself. By considering the number of lower terminals already connected to the upper terminal in addition to the signal level of the signal received from the upper terminal, it is possible to easily establish a communication route having robustness. Also, by considering the number of lower terminals connected to the upper terminal, to be specific, by preferentially selecting the upper terminal which is smaller in the number of lower terminals connected to the upper terminal and connecting this upper terminal to said communication device itself, the amount of electric power consumed at the upper terminal can be lessened and equalized.

The processing means may obtain information relating to the number of relay stages in a range from an uppermost terminal to said upper terminal, as the upper terminal information, based on the signals transmitted from the upper terminals and received in the reception means; and the processing means may be configured to determine an upper terminal being smallest in the number of the relay stages, as the target connected to the communication device, said upper terminal being selected from among upper terminals in which received signal levels calculated in the signal level calculator means are not lower than a predetermined threshold.

In other words, an advantageous communication device comprises a reception means which receives signals transmitted from plural upper terminals; a signal level calculator means which calculates received signal levels of the signals transmitted from the upper terminals and received in the reception means; and a processing means which determines an upper terminal as a target connected to the communication device, from among the plural upper terminals, wherein the processing means obtains information relating to the number of relay stages in a range from an uppermost terminal to said upper terminal, based on the signals transmitted from the upper terminals and received in the reception means; and the processing means may be configured to determine an upper terminal being smallest in the number of the relay stages, as the target connected to the communication device, said upper terminal being selected from among upper terminals in which received signal levels calculated in the signal level calculator means are not lower than a predetermined threshold.

In such a configuration, like the above case, even in a state where all of the communication devices constituting the communication system are not installed, it is possible to construct a communication route between the communication device itself and a communication device which is in a one-level upper order of itself. By considering the number of relay stages in a range from the uppermost terminal to an upper terminal immediately above the communication device itself, in addition to the signal level of the signal received from the upper terminal, it is possible to easily establish a communication route having robustness. Also, by preferentially selecting the upper terminal which is smaller in the number of relay stages and connecting this upper terminal to the communication device itself, the amount of electric power consumed at the upper terminal can be lessened and equalized.

The advantageous communication device may comprise a memory means which stores for each of the upper terminals, a threshold compared to a received signal level when it is determined whether or not to connect the communication device to said upper terminal; wherein the processing means may be configured to determine the upper terminal to be connected to the communication device, the upper terminal being selected from among upper terminals in which received signal levels calculated in the signal level calculator means are not lower than the threshold; and a connection condition regulator means which regulates the threshold stored for each of the upper terminals, based on upper terminal installation information which relates to an environment in which each of the upper terminals is installed and constitutes the upper terminal environment information.

In other words, an advantageous communication device comprises a reception means which receives signals transmitted from plural upper terminals; a signal level calculator means which calculates received signal levels of the signals transmitted from the upper terminals and received in the reception means; a memory means which stores for each of the upper terminals, a threshold compared to a received signal level when it is determined whether or not to connect the communication device to said upper terminal; and a processing means which determines an upper terminal as a target connected to the communication device, from among the plural upper terminals, wherein the processing means is configured to determine the upper terminal to be connected to the communication device, the upper terminal being selected from upper terminals in which received signal levels calculated in the signal level calculator means are not lower than the threshold; the communication device further comprising a connection condition regulator means which regulates (adjusts) the threshold stored for each of the upper terminals, based on upper terminal installation information which relates to an environment in which each of the upper terminals is installed.

In such a configuration, the threshold of the received signal level which is a condition used to determine whether or not to connect the communication device to the upper terminal can be suitably regulated (adjusted) depending on the installation environment of the upper terminal, instead of in a fixed manner. This makes it possible to achieve robust communication more easily.

The connection condition regulator means may be configured to regulate a threshold corresponding to an upper terminal in which the upper terminal installation information is not lower than a predetermined reference such that the threshold is made easier. In such a configuration, if the upper terminal is installed in an environment advantageous (favorable) to communication, the threshold is made easier, and hence communication at a lower signal level is enabled. Since the communication device can be installed in a place farther from such an upper terminal, a communication area can be enlarged.

The connection condition regulator means may be configured to regulate a threshold corresponding to an upper terminal in which the upper terminal installation information is lower than a predetermined reference such that the threshold is made stricter. In such a configuration, robustness can be ensured in communication with the upper terminal which is installed in a less advantageous (unfavorable) environment.

The connection condition regulator means may be configured to regulate the threshold stored for each of the upper terminals, based on the upper terminal installation information, and communication device installation information relating to an environment in which the communication device itself is installed. In such a configuration, the threshold of the received signal level can be suitably regulated, by considering the installation environment of the communication device itself as well as the installation environment of the upper terminal, and as a result robust communication can be achieved properly.

The connection condition regulator means may be configured to make a threshold easier, the threshold corresponding to an upper terminal satisfying a condition in which the communication device installation information is not lower than a predetermined reference, and the upper terminal installation information is not lower than a predetermined reference. In such a configuration, if the communication device itself and the upper terminal are installed in environments advantageous (favorable) to communication, respectively, the threshold is made easier, and hence communication at a lower signal level is enabled. As a result, a communication area can be enlarged.

The connection condition regulator means may be configured to make a threshold stricter, the threshold corresponding to an upper terminal satisfying a condition in which the communication device installation information is not higher than a predetermined reference, and the upper terminal installation information is not higher than a predetermined reference. In such a configuration, robustness can be ensured in communication between the communication device itself and the upper terminal which are installed in less advantageous (unfavorable) environments.

Advantageously, it is possible to search and select a route which enables construction of a system with communication robustness and with improved constructibility, by inputting installation information of an upper terminal, or the like. In particular, a robust communication route can be established for a communication device installed in a fixed manner.

### Brief Description of the Drawings

[Fig. 1] Fig. 1 is a block diagram of a meter interface which is an exemplary communication device according to Embodiment 1 of the present invention, and a block diagram of a concentrator which is an upper terminal of the meter interface and constitutes a communication system along with the meter interface.
[Fig. 2] Fig. 2 is a schematic view showing time slots used to perform communication between a concentrator 100 and a meter interface 300.
[Fig. 3] Fig. 3 is a schematic view showing a detailed content of the time slots of Fig. 2.
[Fig. 4] Fig. 4 is a schematic view collectively showing the contents of Figs. 2 and 3, of the time slots of the concentrator and of the meter interface.
[Fig. 5] Fig. 5 is a view showing an exemplary telegram format of a data signal used in the time slots of the concentrator and of the meter interface of Fig. 4.
[Fig. 6] Fig. 6 is a schematic view showing a configuration of a communication system of the present embodiment, including plural concentrators and plural meter interfaces.
[Fig. 7] Fig. 7(a) is a flowchart showing a sequence according to which the meter interface of Fig. 6 searches a concentrator to be connected to the meter interface, and Fig. 7(b) is a flowchart showing a detailed content of a process for determining a terminal to be connected, in the sequence of Fig. 7(a).
[Fig. 8] Fig. 8 shows exemplary information relating to RSSI levels calculated in the meter interface, from reference signals received from concentrators, and the number of meter interfaces connected to the concentrators.
[Fig. 9] Fig. 9 is a block diagram showing a configuration of a repeater according to Embodiment 2 of the present invention.
[Fig. 10] Fig. 10 is an exemplary table referred to when an installation evaluation value is determined (decided).
[Fig. 11] Fig. 11(a) is a flowchart showing a sequence according to which a meter interface searches a repeater to be connected to the meter interface, and Fig. 11(b) is a flowchart showing a detailed content of a process for determining a terminal to be connected, in the sequence of Fig. 11(a).
[Fig. 12] Fig. 12 is a schematic view showing an exemplary communication system according to Embodiment 2.
[Fig. 13] Fig. 13 is a schematic view showing an exemplary communication system according to Embodiment 3.
[Fig. 14] Fig. 14(a) is a flowchart showing a sequence according to which a meter interface searches a repeater to be connected to the meter interface, and Fig. 14(b) is a flowchart showing a detailed content of a process for determining a terminal to be connected, in the sequence of Fig. 14(a).
[Fig. 15] Fig. 15 is a block diagram of a meter interface which is an exemplary communication device according to Embodiment 4, and a block diagram of a concentrator which is an upper terminal of the meter interface and constitutes a communication system along with the meter interface.
[Fig. 16] Fig. 16 is a schematic view showing a configuration of a communication system according to Embodiment 4, including plural concentrators and a single meter interface.
[Fig. 17] Fig. 17(a) is a flowchart showing a sequence according to which the meter interface of Fig. 16 searches a concentrator to be connected to the meter interface, and Fig. 17(b) is a flowchart showing a detailed content of a process for determining a terminal to be connected, in the sequence of Fig. 17(a).
[Fig. 18] Fig. 18 is a view showing a process for making compensation for a threshold of an electric field intensity level, according to Embodiment 4.
[Fig. 19] Fig. 19 is a view of a configuration of a system for describing a process for determining a concentrator to be connected to a meter interface, which process is performed in the meter interface, according to Embodiment 4.
[Fig. 20] Fig. 20 is a block diagram showing a configuration of a repeater according to Embodiment 5.
[Fig. 21] Fig. 21 is a block diagram showing a configuration of a meter interface according to Embodiment 5.
[Fig. 22] Fig. 22 is a flowchart showing a sequence according to which a meter interface searches a repeater to connected to the meter interface, from among plural repeaters.
[Fig. 23] Fig. 23 is a view showing a process for making compensation for a threshold of an electric field intensity level, according to Embodiment 5.
[Fig. 24] Fig. 24 is a view of a configuration of a system for describing a process for determining a repeater to be connected to a meter interface, which process is performed in the meter interface, according to Embodiment 5.

### Description of the Embodiments

Hereinafter, embodiments of the present invention will be descried with reference to the drawings. Note that the present invention is in no way limited to the embodiments.

### (Embodiment 1)

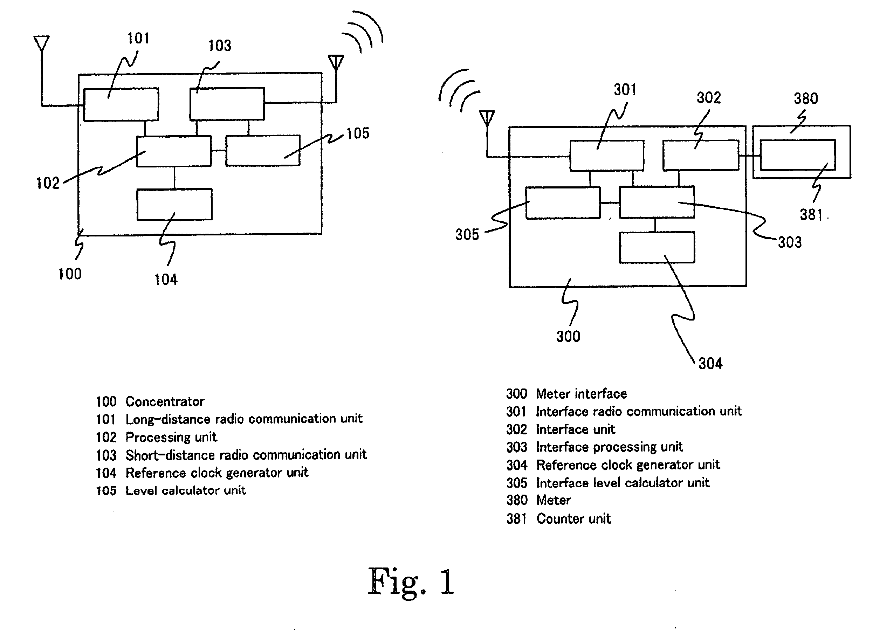

Fig. 1 is a block diagram of a meter interface which is an exemplary communication device of the present invention, and a block diagram of a concentrator which is an upper terminal of the meter interface and constitutes a communication system along with the meter interface. As shown in Fig. 1, specifically, the communication system of the present invention comprises a concentrator 100, a meter interface 300 and a meter 380.

Among these components, the concentrator 100 includes a long-distance radio communication unit 101 constituted by a device for performing communication over a long distance, a short-distance radio communication unit 103 for performing communication with the meter interface 300, a level calculator unit 105 for calculating a signal level (i.e., electric field intensity level or RSSI level) of a signal which is transmitted from the meter interface 300 and received in the short-distance radio communication unit 103, a processing unit 102 which controls the short-distance radio communication unit 103 so that communication is performed according to a protocol or specification predetermined between the concentrator 100 and the meter interface 300, and a reference clock generator unit 104 for generating a reference clock according to which the concentrator 100 performs communication synchronously with the meter interface 300.

The meter interface 300 includes an interface radio communication unit 301 for performing communication with the concentrator 100, an interface level calculator unit 305 for calculating a signal level of a signal transmitted from the concentrator 100 and received in the interface radio communication unit 301, an interface unit 302 for reading a number counted by a counter unit 381 of the meter 380, an interface processing unit 303 which controls the interface unit 302 on a regular basis, determines (decides) a concentrator 100 to be connected to the meter interface 300 from among plural concentrators 100, and controls the interface radio communication unit 301 according to a predetermined sequence or protocol, and a reference clock generator unit 304 for generating a reference clock according to which the meter interface 300 performs communication synchronously with the concentrator 100.

Next, a more specific configuration example of the concentrator 100 will be described. The long-distance radio communication unit 101 in the concentrator 100 is a radio unit of a standard used in cellular phones, and others, and is implemented by a functional configuration such as GSM (Global System for Mobile Communications), GPRS (General Packet Radio Service), or EDGE (Enhanced Data GSM Environment), for example. The long-distance radio communication unit 101 is connected to a supervising server (not shown) via a public line or a network. The supervising server is capable of monitoring the state of the concentrator 100, manipulating the concentrator 100, supervising the concentrator 100, etc.. As a hardware configuration, the concentrator 100 includes an antenna, a low noise amplifier, a detector, an oscillator circuit, a mixer, a phase-locked loop, a frequency divider, a demodulator circuit, a modulator circuit, a power amplifier, a voltage controlled oscillator circuit, a processor having the above function, etc..

The short-distance radio communication unit 103 is a communication unit which outputs a transmission signal equivalent to or lower than a transmission signal output from the long-distance radio communication unit 101 and performs communication with the meter interface 300 connected as a lower terminal. The short-distance radio communication unit 103 includes an antenna, a low noise amplifier, a detector, an oscillator circuit, a mixer, a phase-locked loop, a frequency divider, demodulator circuit, modulator circuit, a power amplifier, a voltage controlled oscillator circuit, a processor having the above function, etc..

The level calculator unit 105 includes an A/D converter circuit, a comparator, a detector circuit, a clock circuit, a calculator circuit, etc., to calculate a level of the signal received in the short-distance radio communication unit 103.

The processing unit 102 controls the state of the concentrator 100, or obtains information of the meter 380 via the interface radio communication unit 301 in the meter interface 300 as a lower terminal, in accordance with a command transmitted from the upper terminal and received in the long-distance radio communication unit 101. The processing unit 102 is constituted by a microcomputer, a storage for storing data or programs, etc..

The reference clock generator unit 104 generates a reference clock required to perform synchronous communication with another communication device such as the meter interface 300, and includes an oscillator circuit constituted by a quarts oscillator, a ceramic oscillator, a capacitor, a transistor, an inductor, or the like, etc., and a temperature correction circuit.

Next, a more specific configuration example of the meter interface 300 will be described. The interface radio communication unit 301 is a radio unit for performing communication with another short-distance radio device including the concentrator 100. The interface radio communication unit 301 includes an antenna, a low noise amplifier, a detector, an oscillator circuit, a mixer, a phase-locked loop, a frequency divider, a demodulator circuit, a modulator circuit, a power amplifier, a voltage controlled oscillator circuit, a processor having the above function, etc..

The reference clock generator unit 304 generates a reference clock required to perform synchronous communication with another communication device such as the meter interface 300, and includes an oscillator circuit constituted by a quarts oscillator, a ceramic oscillator, a capacitor, a transistor, an inductor, or the like, etc., and a temperature correction circuit.

The interface unit 302 is capable of detecting a counted value of the counter unit 381, for example, a motion of the counter unit 381 in the meter 380. For example, the interface unit 302 is constituted by a sensor for sensing the motion of the counter unit 381, such as a reed switch, a coil, or an electrostatic sensor, a semiconductor device, etc..

The meter 380 is a meter for supervising a usage amount or flow rate, such as a gas meter, a tap water meter, an electric power meter, a current meter, a pressure meter, a flow meter, a calorie meter, etc.. The counter unit 381 is incorporated with a sensor unit for counting the usage amount or flow rate, such as a pressure sensor, a measuring cup, a flow sensor of an ultrasonic wave, etc..

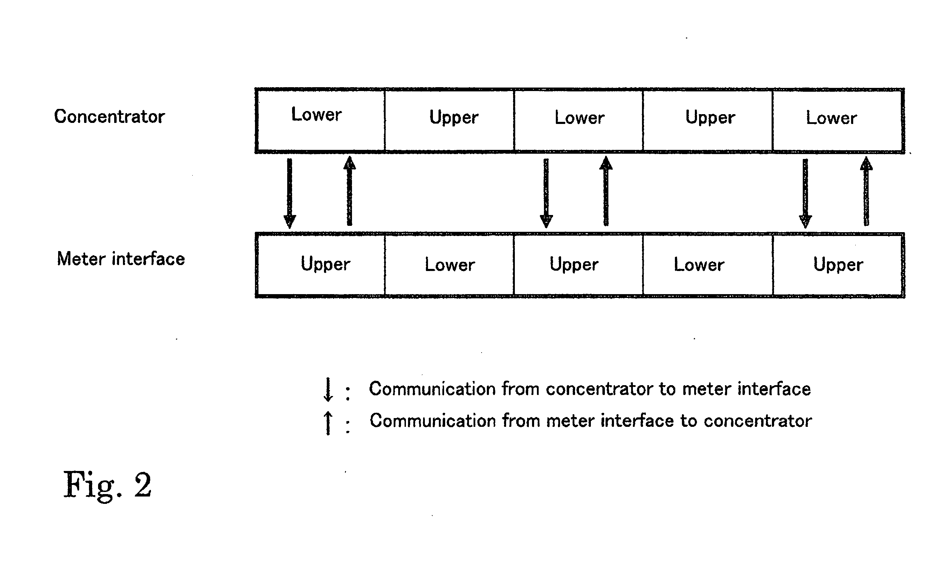

Subsequently, a communication scheme between the concentrator 100 and the meter interface 300 will be described with reference to Fig. 2. Fig. 2 is a schematic view showing time slots according to which communication is performed between the concentrator 100 and the meter interface 300.

Each of the concentrator 100 and the meter interface 300 divides the time slot into an upper time slot and a lower time slot and defines a transmission time period and a reception time period according to the time slot. The time slot of the concentrator 100 and the time slot of the meter interface 300 are synchronized with each other according to reference clocks and the like generated by the corresponding hardware. Therefore, the concentrator 100 and the meter interface 300 perform communication synchronously. For example, as shown in Fig. 2, the lower slot of the time slot of the concentrator 100 indicates a time slot for which the concentrator 100 performs communication with the meter interface 300 connected as a lower terminal to the concentrator 100. The upper slot of the time slot of the meter interface 300 indicates a time slot for which the meter interface 300 performs communication with the concentrator 100 as an upper terminal to be connected to the meter interface 300.

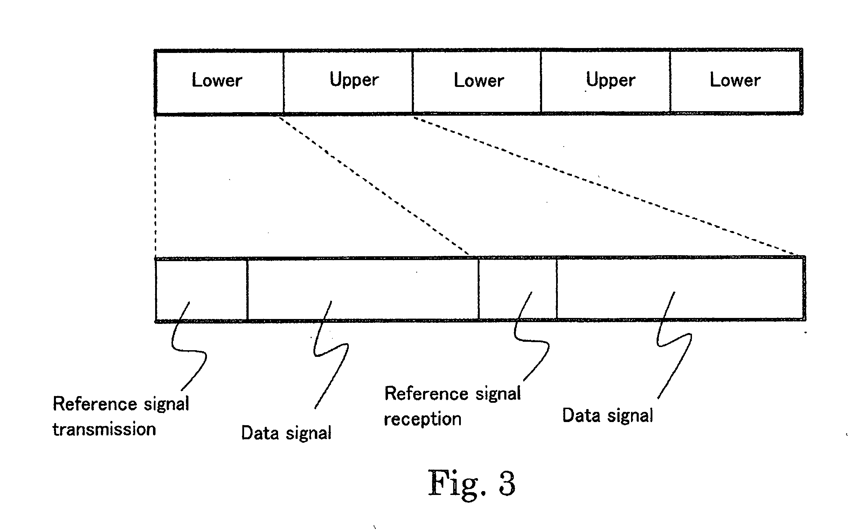

Subsequently, the time slots of Fig. 2 will be described in more detail with reference to Fig. 3. Fig. 3 is a schematic view showing a detailed content of the time slots of Fig. 2. As shown in Fig. 3, the lower slot is divided into a reference signal transmission slot for which a reference signal (e.g., beacon signal) is transmitted, and a data signal slot for which a data signal (e.g., signal containing information of a telegram format) is transmitted and received. The reference signal transmission slot is a time slot for which the reference signal is transmitted from the concentrator 100 (upper terminal) to the meter interface 300 (lower terminal). For this time slot, the concentrator 100 transmits a predetermined reference signal. The data signal slot is a time slot for which, for example, a signal of a telegram format which is longer in length than the reference signal is transmitted and received only when necessary, according to a specification predetermined between the concentrator 100 and the meter interface 300.

In contrast, the upper slot is divided into a reference signal reception slot for which a reference signal is received, and a data signal slot for which a data signal is transmitted and received. The reference signal reception slot is a time slot for which the reference signal is received, the signal being transmitted from the concentrator 100 (upper terminal) to the meter interface 300 (lower terminal). For this time slot, the meter interface 300 receives a predetermined reference signal on a regular basis. The data signal slot is a time slot for which a signal of, for example, a telegram format which is longer in length than the reference signal, is transmitted and received only when necessary, according to a specification predetermined between the concentrator 100 and the meter interface 300, like the lower slot.

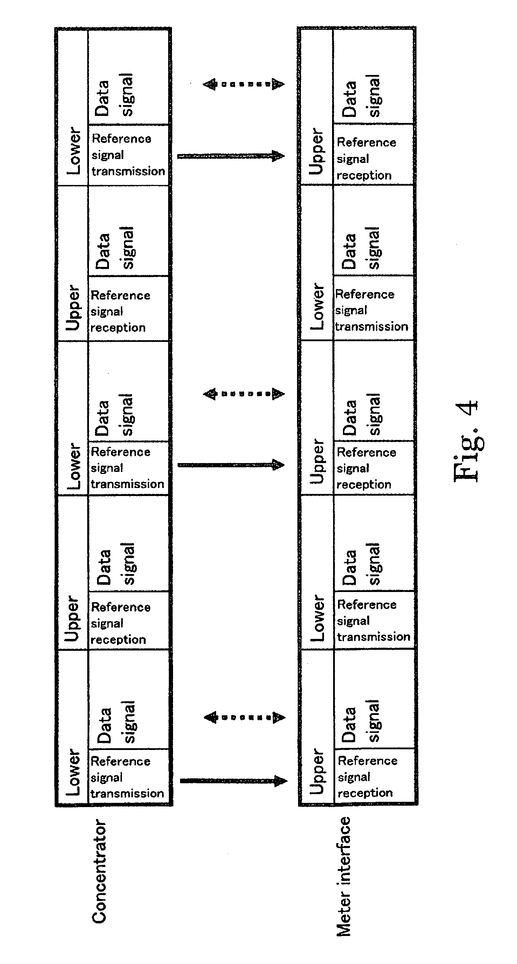

Next, the communication performed between the concentrator 100 and the meter interface 300 will be described with reference to Fig. 4. Fig. 4 is a schematic view representing the contents of Fig. 2 and 3 collectively, regarding the time slot of the concentrator 100 and the time slot of the meter interface 300. As shown in Fig. 4, in the present embodiment, the time slot of the concentrator 100 and the time slot of the meter interface 300 are synchronized with each other.

As shown in Fig. 4, the concentrator 100 transmits the reference signal toward the meter interface 300 at a timing of the reference signal transmission slot of the lower slot. The meter interface 300 receives the reference signal at a timing of the reference signal reception slot of the upper slot. In the data communication slot, communication takes place only when it is necessary to transmit and receive the data signal based on a predetermined specification.

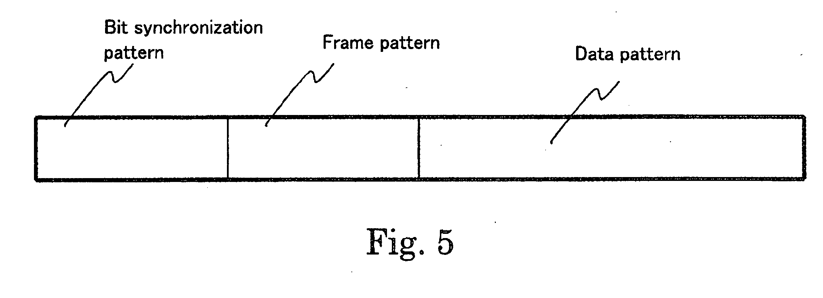

Subsequently, a telegram format of the data signals transmitted from the concentrator 100 and from the meter interface 300 will be described with reference to Fig. 5. Fig. 5 represents an exemplary telegram format of the data signals used in the respective time slots of the concentrator 100 and of the meter interface 300 of Fig. 4.

As shown in Fig. 5, the telegram format is composed of a bit synchronization pattern, a frame pattern, and a data pattern. The bit synchronization pattern is a signal in which "0" and "1" are repeated alternately and which is located at a head of the telegram format, The frame pattern is a data string used to allow the concentrator 100 and the meter interface 300 to recognize that the corresponding telegram is a telegram for use in the system of the present embodiment, and is data unique to this system. The data pattern is data complying with a predetermined protocol, and is a data string containing, for example, an ID code of a transmitting terminal, an ID code of a receiving terminal (destination), various control signals, various information, etc.. In addition, the data pattern contains an installation evaluation value of an upper terminal, information of the number of relay stages of the upper terminal, information of the number of lower terminals already connected to the upper terminal, and the like.

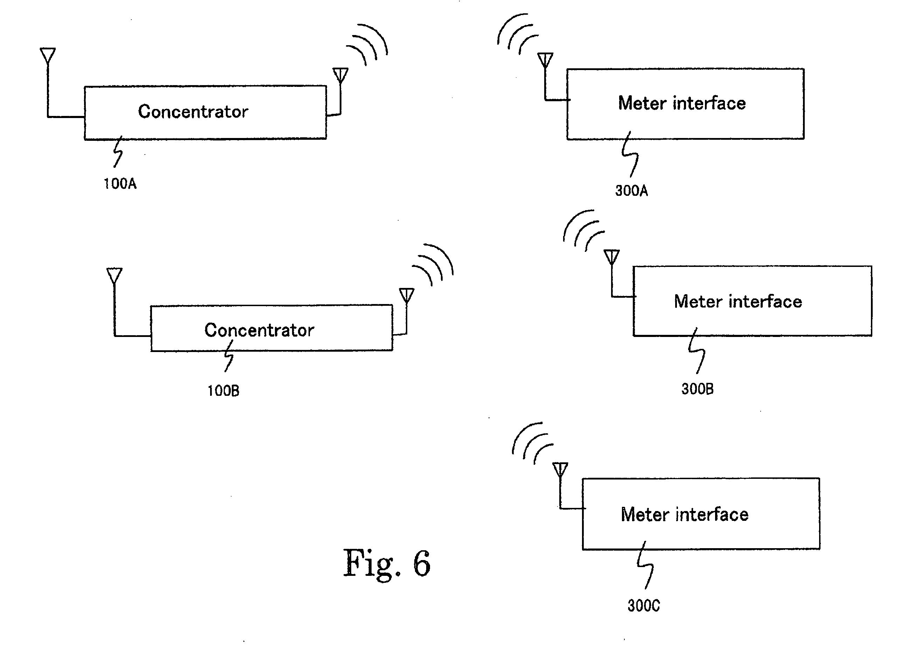

Subsequently, a description will be given of a procedure according to which the meter interface 300 of Fig. 1 searches the concentrator 100 with which the meter interface 300 should perform communication, with reference to Fig. 6.

Fig. 6 is a schematic view showing a configuration of a communication system of the present embodiment, including plural concentrators and plural meter interfaces. In the example of Fig. 6, as the above stated concentrator 100, two concentrators, which are a concentrator 100A and a concentrator 100B, are installed, while as the meter interface 300, three meter interfaces, which are a meter interface 300A, a meter interface 300B, and a meter interface 300C, are installed. Now, a description will be given of a method in which each meter interface searches a concentrator with which that meter interface should perform communication in this environment.

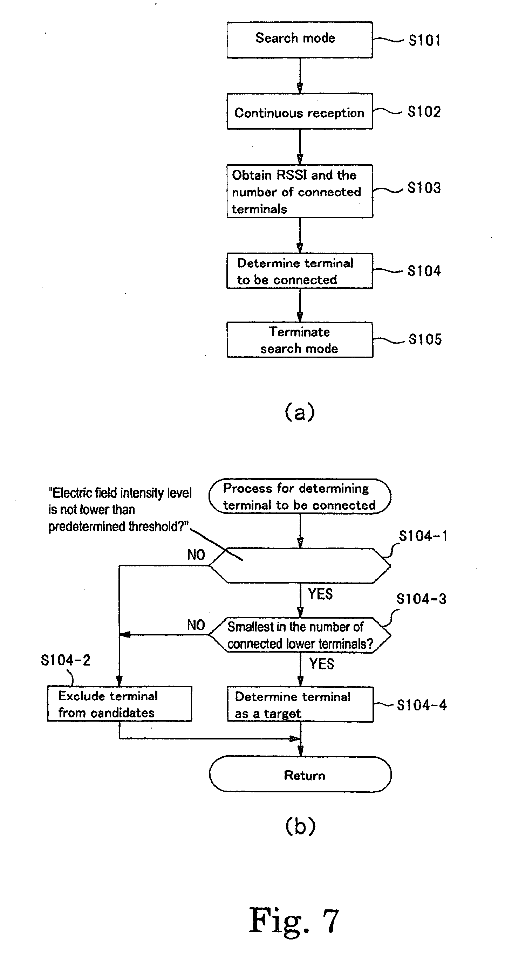

Fig. 7(a) is a flowchart showing a sequence according to which the meter interface of Fig. 6 searches a concentrator to be connected to this meter interface. Fig. 7(b) is a flowchart showing a detailed content of a process (S104) for determining a terminal to be connected, in this sequence. With reference to Fig. 7(a), a description will be given of the procedure according to which the meter interface 300A searches the concentrator to be connected to the meter interface 300A, for example.

Initially, the meter interface 300A shifts at a predetermined timing to a mode (search mode) in which the meter interface 300A searches a concentrator to be connected to the meter interface 300A, the mode being different from a communication mode in which a normal meter reading value, data of an abnormality of a flow rate, and others are transmitted and received (S101). The predetermined timing may be suitably set. For example, the predetermined timing may be a time point when an operator for installing the meter interface 300A inputs a predetermined operation signal to the meter interface 300A, a regular timing preset, or a time point after a time period for which a state where communication in the normal mode is unfeasible continues has passed.

Entering the search mode, the meter interface 300A causes the interface radio communication unit 301 to receive the reference signal continuously for a predetermined period of time (S102). During the period of time for which the reference signal is received continuously, in the meter interface 300A, the interface radio communication unit 301 receives the reference signal transmitted from each concentrator on a regular basis, and the interface level calculator unit 305 converts the reference signal into RSSI (received signal strength indicator) level, thereby obtaining, for each concentrator, an electric field intensity level (hereinafter also referred to as "RSSI level") between the concentrator and the meter interface 300A. Concurrently with this, the signal transmitted from the concentrator is demodulated, to obtain the number of meter interfaces connected to the concentrator. As used herein, "the number of meter interfaces connected to the concentrator" means the number of meter interfaces which are lower terminals already connected to the concentrator. If the meter interface 300A receives the signals from plural concentrators, it obtains the electric field intensity level and the number of meter interfaces connected to the concentrator, corresponding to each of the plural concentrators (S103).

Then, the meter interface 300A determines a concentrator to be actually connected to the meter interface 300A, based on the information obtained in step S103, i.e., the electric field intensity level indicating a connection intensity of communication with each concentrator, and the number of meter interfaces connected to the concentrator (S104). In this determination method, a concentrator having an electric field intensity level which is not lower than a predetermined threshold and is smallest in the number of meter interfaces connected to the concentrator, is determined (decided), as the concentrator to be connected to the meter interface 300A. When the meter interface 300A finishes determining the concentrator to be connected to the meter interface 300A in step S104, the meter interface 300A terminates the search mode (S105).

The process for determining the terminal to be connected in step S104 will be described in more detail with reference to Fig. 7(b). The interface processing unit 303 of the meter interface 300A determines whether or not the electric field intensity level of the reference signal received from each concentrator is not lower than a predetermined threshold (S104-1). If it is determined that the electric field intensity level is lower than the predetermined threshold (S104-1: NO), the meter interface 300A excludes that concentrator from candidates which may be allowed to be connected to the meter interface 300A (S104-2). On the other hand, if it is determined that the electric field intensity level is not lower than the predetermined threshold (S 104-1: YES), the meter interface 300A compares the number of meter interfaces connected to the concentrator, between concentrators having electric field intensity levels which are not lower than the threshold.

To be specific, the meter interface 300A determines whether or not the number of meter interfaces connected to the concentrator is smallest (i.e., the number of lower terminals already connected to the concentrator is smallest) (S104-3). If it is determined that the number of meter interfaces connected to the concentrator is not smallest (S 104-3: NO), the meter interface 300A excludes that concentrator from the candidates which may be allowed to be connected to the meter interface 300A (S104-2). On the other hand, if it is determined that the number of meter interfaces connected to the concentrator is smallest (S 104-3: YES), the meter interface 300A determines (decides) that concentrator as a target (S104-4).

In the above described manner, the meter interface 300A determines (decides) the concentrator to be connected to the meter interface 300A based on the electric field intensity levels and the number of meter interfaces connected to the concentrators (S104). Note that if the meter interface 300A can receive the reference signal from only one concentrator, the determination process of step S104-3 may be omitted from the flowchart of Fig. 7(b). In this case, if a result of determination in step S104-1 is "YES," then the process may go to step S 104-4. The above described process for determining (deciding) the terminal to be connected may be performed in the same manner in the meter interface 300B and the meter interface 300C.

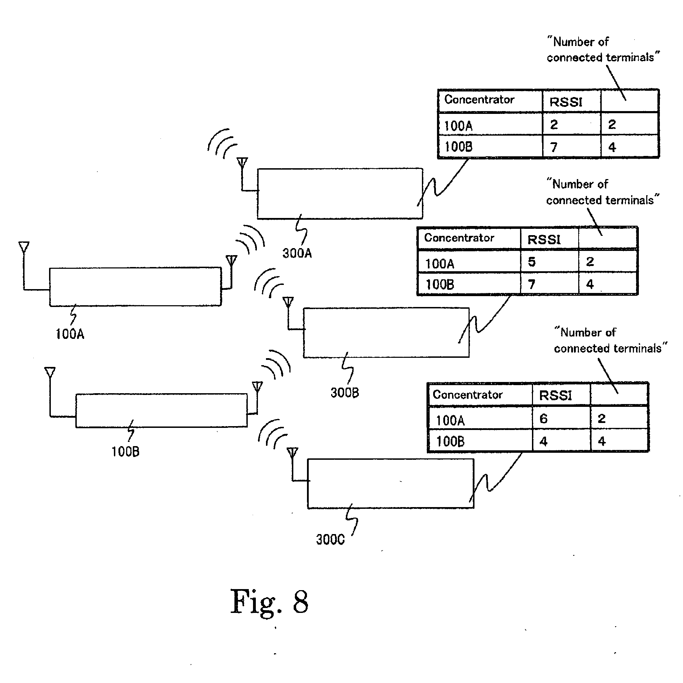

Next, a description will be given of a process performed in the interface processing unit 303 of each of plural meter interfaces when it determines a concentrator to be connected to that meter interface, with reference to Fig. 8. Fig. 8 shows exemplary information relating to RSSI levels of the concentrator 100A and the concentrator 100B, and the number of meter interfaces connected to the concentrators 100A and 100B, the RSSI levels being calculated in the meter interface 300A, the meter interface 300B, and the meter interface 300C, from the reference signals transmitted from the concentrator 100A and the concentrator 100B. In the present embodiment, it is supposed that the RSSI level is set to a value which is not lower than "4" as a condition relating to the RSSI level of the concentrator which is allowed to be connected to each meter interface.

As shown in Fig. 8, in the case of the meter interface 300A, the RSSI level calculated from the reference signal transmitted on a regular basis from the concentrator 100A is "2, " and the RSSI level calculated from the reference signal transmitted on a regular basis from the concentrator 100B is "7. " As described above, since the RSSI level is not lower than "4" as the condition relating to the RSSI level of the concentrator which is allowed to be connected to the meter interface, the meter interface 300A determines (decides) the concentrator 100B as a target.

In the case of the meter interface 300B, the RSSI level calculated from the reference signal transmitted from the concentrator 100A is "5, " and the RSSI level calculated from the reference signal transmitted from the concentrator 100B is "7. " Since the RSSI level of the concentrator 100B is higher than that of the concentrator 100A, it is presumed that communication with the concentrator 100B is more stable than communication with the concentrator 100A. Regarding the number of meter interfaces connected to each concentrator, which information are transmitted from the respective concentrators, two meter interfaces are already connected to the concentrator 100A, while four meter interfaces are already connected to the concentrator 100B. As described with reference to Fig. 7(b), if there exist plural concentrators having RSSI levels which are higher than the predetermined RSSI level, the meter interface 300B selects a concentrator which is smaller in the number of meter interfaces connected to the concentrator (S104-3). Therefore, the meter interface 300B determines (decides) as a target, the concentrator 100A which is smaller in the number of meter interfaces connected to the concentrator.

In the case of the meter interface 300C, the RSSI level of the concentrator 100A and the RSSI level of the concentrator 100B are "6" and "4," respectively, which satisfy the predetermined reference level (threshold) (S104-1: YES). However, the concentrator 100A is smaller in the number of meter interfaces connected to the concentrator than the concentrator 100B, and therefore, the meter interface 300C determines (decides) the concentrator 100A as a target.

As described above, when the meter interface searches the concentrator to be connected to the meter interface, the meter interface selects the concentrator which is smaller in the number of another meter interfaces connected to the concentrator, from among the concentrators having electric field intensity levels which are not lower than the predetermined reference level (threshold). This makes it possible to suitably equalize a communication amount while ensuring communication robustness, and reduce and equalize the amount of electric power consumption, among upper terminals (in the present embodiment, concentrators).

By performing the search method of the communication route using the data of the reference signal transmitted from the upper terminal on a regular basis as described above, the communication route can be constructed using only the installed communication devices in a state where all of the terminals constituting a communication system to be constructed are not installed. As a result, the system can be constructed with improved flexibility.

Moreover, the above method may be applied in the same manner to even a case where a repeater serving as a relay joins in the communication performed between the concentrator and the meter interface, and an upper terminal to be connected is determined (decided). To be specific, by assuming that the concentrator is the upper terminal, and the repeater is the lower terminal and is configured as the communication device of the present invention, the repeater can determine (decide) a concentrator to be connected to the repeater, using the above method. In the same manner, assuming that the repeater is the upper terminal and the meter interface is the lower terminal, the meter interface can determine (decide) a repeater to be connected to the meter interface, using the above method.

### (Embodiment 2)

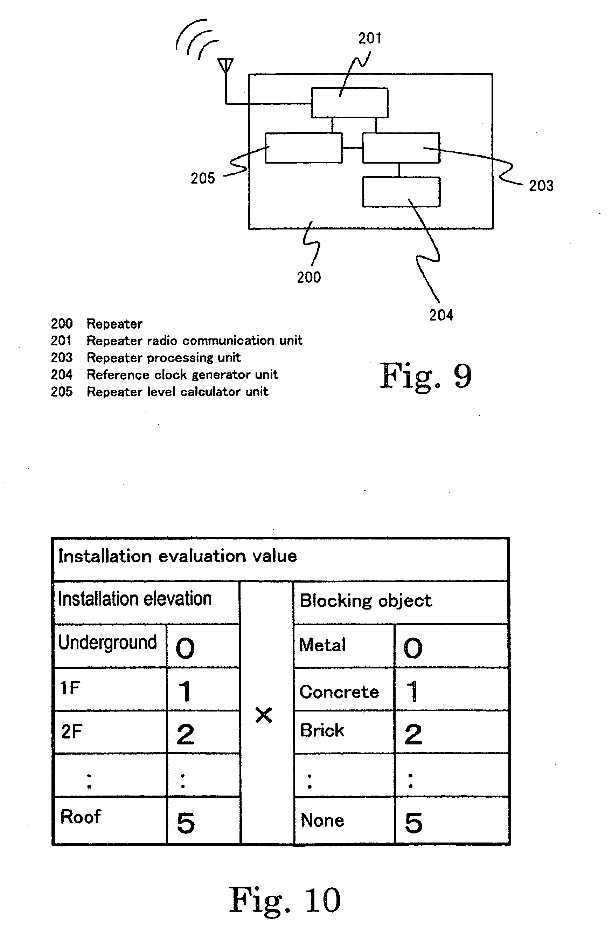

Next, a description will given of a route searching method performed between the meter interface and the repeater, or between the repeater and the concentrator, in a communication system including concentrators, repeaters (relay devices), and meter interfaces. Especially, in the present embodiment, a description will be given of a method of searching a communication route based on an electric field intensity level of a signal transmitted from an upper terminal and received in a lower terminal, and an installation environment of the upper terminal. The configuration of the concentrator and the configuration of the meter interface are the same as those shown in Fig. 1 of Embodiment 1. Therefore, hereinafter, a difference from Embodiment 1 will be described. Initially, the configuration of the repeater will be described with reference to Fig. 9.

Fig. 9 is a block diagram showing a configuration of the repeater. A repeater 200 is used in a case where communication which keeps a predetermined electric wave intensity cannot be realized, due to a long communication distance over which the communication is performed between the concentrator 100 and the meter interface 300, or a case where a stable communication cannot be performed between these terminals due to the fact that a building structure, a road, or others blocks or attenuates an electric wave. The repeater 200 installed for such purposes serves as a relay for communication between the concentrator 100 and the meter interface 300 to ensure a communication route, or to make compensation for an electric wave intensity level which has been lowered due to shadowing.

The repeater 200 includes a repeater radio communication unit 201 for performing communication with the concentrator 100 or the meter interface 300, and a repeater level calculator unit 205 for calculating a signal level of a signal transmitted from the concentrator 100 or the meter interface 300 and received in the repeater radio communication unit 201. The repeater 200 further includes a repeater processing unit 203 which controls the operation of the respective units to perform communication based on a protocol or specification predetermined between the concentrator 100, the meter interface 300 and the repeater 200, and stores "installation evaluation value" (detailed content will be described later) of the repeater 200 itself, and a reference clock generator unit 204 for generating a reference clock in accordance with which communication is performed synchronously with each terminal.

The repeater radio communication unit 201 in the repeater 200 is a radio unit for performing communication with another short-distance radio terminals including the concentrator 100 and the meter interface 300. To be specific, the repeater radio communication unit 201 is configured to include an antenna, a low noise amplifier, a detector, an oscillator circuit, a mixer, a phase-locked loop, a frequency divider, a demodulator circuit, a modulator circuit, a power amplifier, a voltage controlled oscillator circuit, a processor having the above function, etc.. Note that a communication hardware specification used in the concentrator 100 and the repeater 200 and a communication hardware specification used in the repeater 200 and the meter interface 300 need not be the same. For example, in the specification defined between the concentrator 100 and the repeater 200, a frequency band which allows the use of a high transmission output so that the electric wave reaches a farther point over a long distance, is used, while in the specification defined between the repeater 200 and the meter interface 300, communication may be performed with a low output in a relatively low frequency band to achieve electric power saving. Of course, the same specification may be used.

The reference clock generator unit 204 is configured to include an oscillator circuit or the like constituted by a quarts oscillator, a ceramic oscillator, a capacitor, a transistor, an inductor, etc., and a temperature correction circuit, to generate a reference clock required to perform synchronous communication with the meter interface 300, etc..

Next, a description will be given of the installation evaluation value stored in the repeater processing unit 203. When the repeater 200 is installed, the installation evaluation value used to determine the installation environment of the repeater 200 is input and stored in the repeater processing unit 203. Fig. 10 is an exemplary table referred to when the installation evaluation value is determined (decided). As shown in Fig. 10, an input value of the installation evaluation value is determined (decided) with reference to a table in which for example, "installation elevation" and presence/absence and kind of "blocking object,", which are included in factors indicating the installation environment in which the repeater 200 is installed, are expressed by numeric values.

A procedure for calculating the installation evaluation value will be described with reference to Fig. 10. For example, in a case where the repeater 200 is installed on a roof and there is a brick-made blocking object, "installation elevation" is evaluated as "5," and "blocking object" is evaluated as "2." Then, a product of these numeric values is calculated and determined as the installation evaluation value. That is, in this example, a product of "5" and "2" is "10," which is the installation evaluation value, and this value is input to the repeater 200. This installation evaluation value may be manually input by an operator, or a pressure meter or a sensor or the like for measuring an electric wave propagated, may be built into the repeater 200, and the repeater 200 itself may calculate the installation evaluation value automatically and input the calculated installation evaluation value to the repeater processing unit 203.

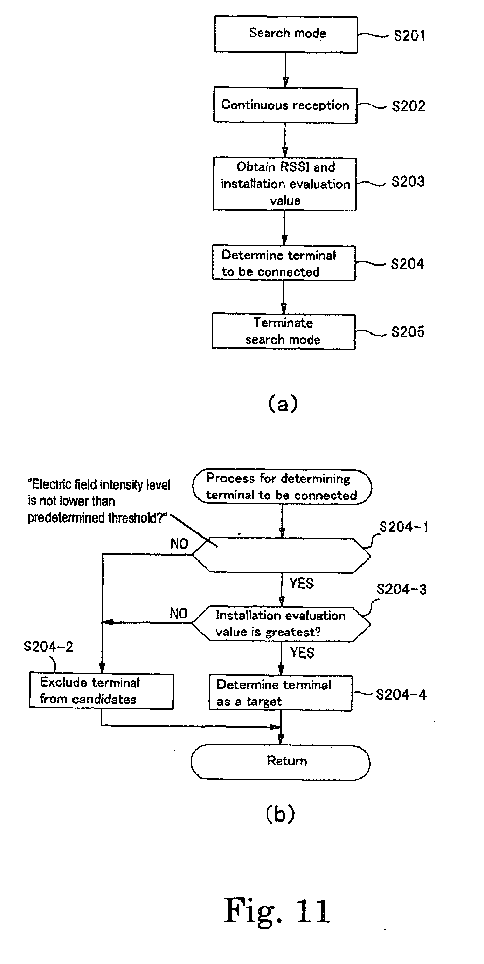

A description will be given of a sequence according to which the meter interface 300 searches a repeater to be connected to the meter interface 300, with reference to Figs. 11(a) and 11(b). Fig. 11 is a flowchart showing a procedure for searching a communication route according to Embodiment 2. Fig. 11(a) shows a sequence according to which the meter interface 300 searches the repeater 200 to be connected to the meter interface 300, and Fig. 11(b) shows a detailed content of a process for determining a terminal to be connected, in the sequence of Fig. 11(a).

Initially, as shown in Fig. 11(a), the meter interface 300 shifts at a predetermined timing to a mode (search mode) in which the meter interface 300 searches a repeater 200 to be connected to the meter interface 300, the mode being different from a communication mode in which a normal meter reading value, data of an abnormality of a flow rate, and others are transmitted and received (S201). The predetermined timing may be suitably set as in the manner described in Embodiment 1.

Entering the search mode, the meter interface 300 causes the interface radio communication unit 301 to receive the reference signal continuously for a predetermined period of time (S202). During the state where the reference signal is received continuously, the interface radio communication unit 301 of the meter interface 300 receives the reference signal from each repeater 200 on a regular basis, and the interface level calculator unit 305 of the meter interface 300 converts the signal into RSSI level, thereby obtaining for each repeater 200, the electric field intensity level between the repeater 200 and the meter interface 300. Concurrently with this, the meter interface 300 demodulates the signal transmitted from each repeater 200 to obtain its installation evaluation value (S203).

Then, the meter interface 300 determines a repeater 200 to be actually connected to the meter interface 300, based on the information obtained in step S203, i.e., the electric field intensity level indicating connection intensity between the meter interface 300 and each repeater 200, and the installation evaluation value of each repeater 200 (S204). In this determination method, the meter interface 300 determines (decides) as a repeater 200 to be connected to the meter interface 300, a repeater 200 having an electric field intensity level which is not lower than a predetermined threshold and has a highest installation evaluation value. When the meter interface 300 finishes determining the repeater 200 to be connected to the meter interface 300 in step S204, the meter interface 300 terminates the search mode (S205).

With reference to Fig. 11(b), a detailed description will be given of the process for determining the terminal to be connected in step S204. The interface processing unit 303 of the meter interface 300 determines whether or not the electric field intensity level of the reference signal received from each repeater 200 is not lower than a predetermined threshold (S204-1). If it is determined that the electric field intensity level is lower than the threshold (S204-1: NO), the interface processing unit 303 of the meter interface 300 excludes that repeater 200 from candidates to be connected to the meter interface 300 (S204-2). On the other hand, if it is determined that the electric field intensity level is not lower than the threshold (S204-1: YES),the interface processing unit 303 of the meter interface 300 makes comparison between the installation evaluation values of the repeaters 200 having electric field intensity levels which are not lower than the threshold.

To be specific, the meter interface 300 determines whether or not the installation evaluation value of each repeater 200 is greatest (S204-3). If it is determined that the installation evaluation value is not greatest (S204-3: NO), the meter interface 300 excludes that repeater from the candidates (S204-2), while if it is determined that the installation evaluation value is greatest (S204-3: YES), the meter interface 300 determines (decides) that repeater 200 as a target (S204-4).

In the above described manner, the meter interface 300 determines the repeater 200 to be connected to the meter interface 300 based on the electric field intensity levels and the installation evaluation values (S204). If there exists only one repeater 200 from which the meter interface 300 can receive the reference signal, the determination process in step S204-3 may be omitted from the flowchart of Fig. 11 (b). In that case, if a result of determination in step 5204-1 is "YES," then the process may go to step S204-4.

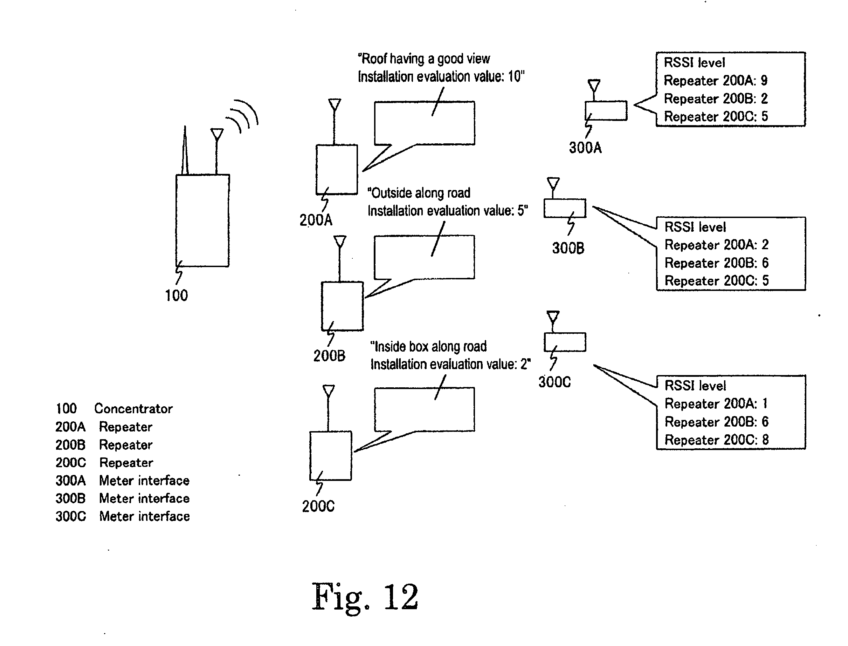

Next, a description will be given of an exemplary process performed by the interface processing unit 303 when each of plural meter interfaces determines a repeater to connected to that meter interface, with reference to Fig. 12. Fig. 12 shows a communication system including one concentrator 100, three repeaters 200A, 200B, and 200C, and three meter interfaces 300A, 300B, and 300C. Fig. 12 also shows the installation evaluation values stored in the respective repeaters and information (information used to determine the repeater to be connected) which are obtained by the meter interfaces obtain in accordance with the sequence of Fig. 11(a). In the present embodiment, it is supposed that the RSSI level is not lower than "4" as the condition relating to the RSSI level of the repeater which is allowed to be connected to each meter interface.

As shown in Fig. 12, in the case of the meter interface 300A, the RSSI level calculated from the reference signal transmitted from the repeater 200A is "9," the RSSI level calculated from the reference signal transmitted from the repeater 200B is "2," and the RSSI level calculated from the reference signal transmitted from the repeater 200C is "5." Since the RSSI level is not lower than "4" as the condition relating to the RSSI level of the repeater which is allowed to be connected to each meter interface as described above, the meter interface 300A excludes the repeater 200B from candidates which may be allowed to be connected to the meter interface 300A (S204-2). By comparison, the installation evaluation value of the repeater 200A is "10," while the installation evaluation value of the repeater 200C is "2." Therefore, the meter interface 300A decides as a target, the repeater 200A having a greater installation evaluation value (i.e., connection condition is better).

In the case of the meter interface 300B, the RSSI levels calculated from the reference signal levels transmitted from the repeaters 200A, 200B, and 200C are "2," "6,", and "5." In this case, the repeater 200B and the repeater 200C satisfy the connection condition relating to the RSSI level. From the repeater 200B and the repeater 200C, the meter interface 300B decides as a target, the repeater 200B having a greater installation evaluation value.

In the case of the meter interface 300C, the repeater 200B and the repeater 200C satisfy the connection condition relating to the RSSI level. Of these two repeaters 200B and 200C, the repeater 200B has a greater installation evaluation value. Therefore, the meter interface 300C decides as a target, the repeater 200B having a greater installation evaluation value.

As described above, when the meter interface searches the repeater to be connected to the meter interface, it selects a repeater having a greatest installation evaluation value, from repeaters having electric field intensity levels which are not lower than a predetermined threshold. Because of this, a communication route is not decided only based on the magnitude of a temporary electric field intensity level, but is decided in view of a constant installation environment, which makes it possible to achieve improved communication robustness. This can reduce a need to perform a searching process of a communication route again, due to degraded communication robustness, or the like, after the communication route is established once. Therefore, a communication amount and the amount current consumption can be lessened.

Although in the above example, searching of the route between the meter interface and the repeater is performed, a similar configuration and method may be applied to a process for searching a communication route between another terminals which have a relation of an upper terminal and a lower terminal. For example, the similar configuration and method may be applied to searching of a route between various terminals, for example, searching of a route between a repeater as an upper terminal and a repeater as a lower terminal which are connected in series, searching of a route between a concentrator as an upper terminal and a repeater as a lower terminal, searching of a route between a concentrator and a meter interface which are connected in series, etc,

### (Embodiment 3)

Next, a description will be given of a route searching method performed between the meter interface and the repeater, in a communication system including concentrators, repeaters (relay devices), and meter interfaces. Especially, in the present embodiment, a description will be given of a method of searching a communication route, based on an electric field intensity level of a signal of an upper terminal (e.g., repeater) which can be received in a lower terminal, and the number of relay stages in a range from an uppermost terminal (e.g., concentrator) to that the upper terminal. The concentrators, the repeaters, and the meter interfaces in the present embodiment have the same configuration as those described in Embodiment 1 and Embodiment 2. Therefore, the same configuration as those of Embodiment 1 and Embodiment 2 will not be described in detail, and a difference from those of Embodiment 1 and Embodiment 2 will be described.

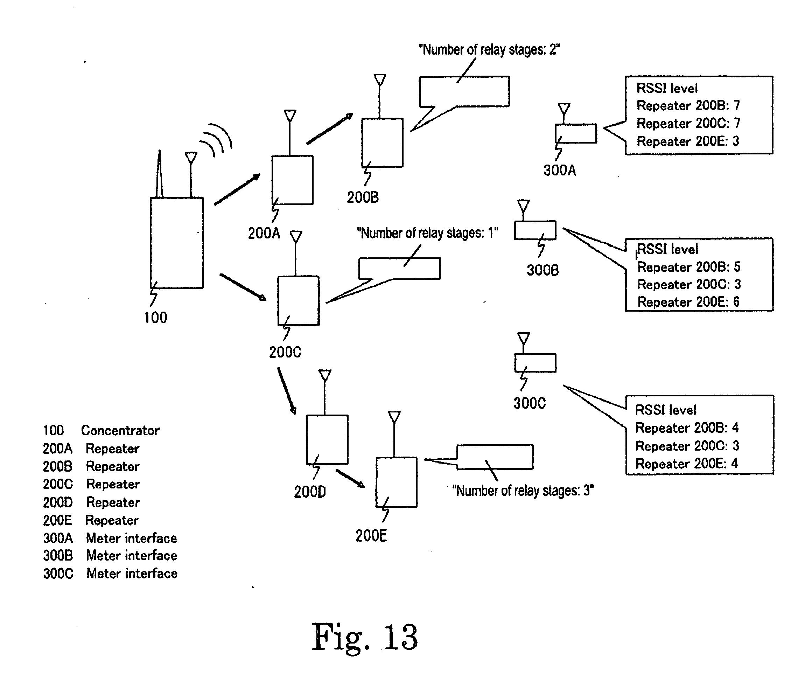

Fig. 13 shows a communication system including one concentrator 100, five repeaters 200A ∼ 200E, and three meter interfaces 300A ∼ 300C. In the example of the system of Fig. 13, the two repeaters 200A and 200C are connected to the concentrator 100 so as to directly perform communication with the concentrator 100. The repeater 200B is connected to the repeater 200A as a lower terminal closest to the repeater 200A, while the repeater 200D is connected to the repeater 200D as a lower terminal closest to the repeater 200C. The repeater 200E is connected to the repeater 200D as a lower terminal closest to the repeater 200D.

Therefore, regarding the number of relay stages of the repeaters (i.e., the number of repeaters in a range from the concentrator 100 which is the uppermost terminal to the repeaters themselves), the repeater 200A is "1," the repeater 200C is "1," the repeater 200B is "2," the repeater 200D is "2," and the repeater 200E is "3." Each repeater stores in the repeater processing unit 203 information relating to the number of relay stages of that repeater itself. The information relating to the number of relay stages may be obtained by inputting information by a person which installs that repeater, or automatically by performing communication with an upper terminal.

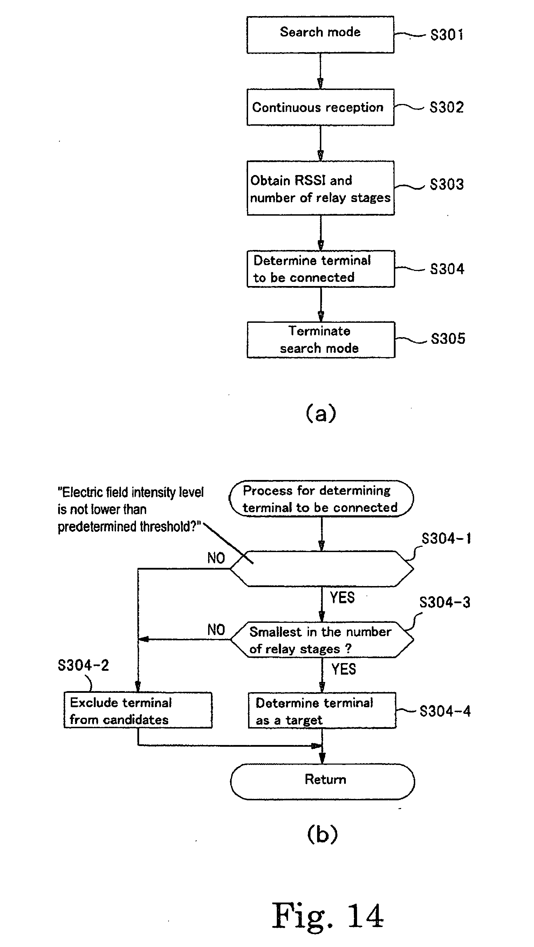

Next, a description will be given of a sequence according to which a meter interface searches a repeater to be connected to the meter interface, with reference to Figs. 14(a) and 14(b). Fig. 14 is a flowchart showing a procedure for searching a communication route according to Embodiment 3. Fig. 14(a) shows a sequence according to which the meter interface searches the repeater to be connected to the meter interface, and Fig. 14(b) shows a detailed content of a process for determining a terminal to be connected, in the sequence of Fig. 11 (b).

Initially, as shown in Fig. 14(a), the meter interface shifts at a predetermined timing to a mode (search mode) in which the meter interface searches a repeater to be connected to the meter interface, the mode being different from a communication mode in which a normal meter reading value, data of an abnormality of a flow rate, and others are transmitted and received (S301). Entering the search mode, the meter interface causes the interface radio communication unit 301 to receive the reference signal continuously for a predetermined period of time (S302). During the state where the reference signal is received continuously, the interface radio communication unit 301 of the meter interface receives the reference signal from each repeater on a regular basis, and the interface level calculator unit 305 of the meter interface converts the signal into RSSI level, thereby obtaining for each repeater, the electric field intensity level between the repeater and the meter interface. Concurrently with this, the meter interface demodulates the signal transmitted from the repeater to obtain the number of relay stages of each repeater (S303).

Then, the meter interface determines a repeater to be actually connected to the meter interface, based on the information obtained in step S303, i.e., the electric field intensity level indicating connection intensity between the meter interface and each repeater, and the number of relay stages of each repeater (S304). In this determination method, the meter interface determines (decides) as a repeater to be connected to the meter interface, a repeater having an electric field intensity level which is not lower than a predetermined threshold and being smallest in the number of relay stages. When the meter interface finishes determining the repeater to be connected to the meter interface in step S304, the meter interface terminates the search mode (S305).

A detailed description will be given of the process for determining the terminal to be connected in step S304, with reference to Fig. 14(b). The interface processing unit 303 of the meter interface determines whether or not the electric field intensity levels of the reference signal received from each repeater is not lower than a predetermined threshold (S304-1). If it is determined that the electric field intensity level is lower than the predetermined threshold (S304-1: NO), the interface processing unit 303 of the meter interface excludes that repeater from candidates (S304-2). On the other hand, if it is determined that the electric intensity level is not lower than the predetermined threshold (S304-1: YES), the interface processing unit 303 of the meter interface makes comparison of the number of relay stages, between the repeaters having the electric field intensity levels which are not lower than the predetermined threshold.

To be specific, the interface processing unit 303 of the meter interface determines whether or not the number of relay stages of each repeater is smallest (S304-3). If it is determined that the number of relay stages is not smallest (S304-3: NO), the interface processing unit 303 of the meter interface excludes that repeater from the candidates (S304-2), while if it is determined that the number of relay stages is smallest (S304-3: YES), the interface processing unit 303 determines (decides) that repeater as a target (S304-4).

In the manner as described above, the meter interface determines the repeater to be connected to the meter interface, based on the electric field intensity levels and the number of relay stages (S304). Note that if the meter interface can receive the reference signal from only one repeater, the determination process of step S304-3 may be omitted from the flowchart of Fig. 14(b). In this case, if a result of determination in step S304-1 is "YES," then the process may go to step S304-4.

Next, a description will be given of a process performed in the interface processing unit 303 of each of plural meter interfaces when it determines a repeater to be connected to that meter interface, with reference to Fig. 13. Like the case discussed previously, in the present embodiment, it is supposed that the RSSI level is set to a value which is not lower than "4" as the condition relating to the RSSI level of the repeater which is allowed to be connected to each meter interface.

As shown in Fig. 13, the meter interface 300A receives the reference signals from the repeaters 200B, 200C and 200E, respectively. The RSSI level calculated from the reference signal transmitted from the repeater 200B is "7, " the RSSI level calculated from the reference signal transmitted from the repeater 200C is "7," and the RSSI level calculated from the reference signal transmitted from the repeater 200E is "3." As described above, since the RSSI level is not lower than "4" as the condition relating to the RSSI level of the repeater which is allowed to be connected to the meter interface, the meter interface 300A excludes the repeater 200E from the candidates (S304-2). On the other hand, the number of relay stages of the repeater 200B is "2" and the number of relay stages of the repeater 200C is "1." Therefore, the meter interface 300A determines (decides) as a target, the repeater 200C which is smaller in the number of relay stages.

The meter interface 300B receives the reference signals from the repeaters 200B, 200C and 200E, respectively. The RSSI level of the repeater 200B is "5, " the RSSI level of the repeater 200C is "3," and the RSSI level of the repeater 200E is "6." Therefore, the meter interface 300B excludes the repeater 200C which does not satisfy the connection condition of the RSSI level, from candidates. When a comparison is made between the number of relay stages of the repeater 200B and the number of relay stages of the repeater 200E, the number of relay stages of the repeater 200B is "2" and the number of relay stages of the repeater 200E is "3." Therefore, the meter interface 300B determines as a target, the repeater 200B which is smaller in the number of relay stages.

The meter interface 300C receives the reference signals from the repeaters 200B, 200C and 200E, respectively. The RSSI level of the repeater 200B is "4, " the RSSI level of the repeater 200C is "3," and the RSSI level of the repeater 200E is "4." Therefore, the repeater 200B and the repeater 200E satisfy the connection condition relating to the RSSI level. Since the number of relay stages of the repeater 200B is "2," and the number of relay stages of the repeater 200E is "3," the meter interface 300C determines as a target, the repeater 200B which is smaller in the number of relay stages.

As described above, when the meter interface searches the repeater to be connected to the meter interface, the meter interface selects the repeater which is smallest in the number of relay stages, from among the repeaters having electric field intensity levels which are not lower than the predetermined threshold. Because of this, communication robustness can be ensured, and a communication amount in the overall system can be lessened. Further, the amount of current consumed in the upper terminal, such as a repeater, can be lessened.

Although in the above example, searching of the route between the meter interface and the repeater is performed, a similar configuration and method may be applied to a process for searching a communication route between another terminals which have a relation of an upper terminal and a lower terminal. For example, the similar method may be applied to searching of a route between a repeater as an upper terminal and a repeater as a lower terminal which are connected in series, or searching of a route for directly connecting a concentrator (limited to a concentrator which is not an uppermost terminal) to a meter interface.

By combining two or all of the above embodiments 1 to 3, communication robustness and low electric power consumption can be realized. For example, Embodiment 1 or Embodiment 3 may be combined with Embodiment 2. In this case, regarding an indicator (index) used for selecting the upper terminal, a priority is set among the number of meter interfaces connected to the concentrator, the number of relay stages, and the installation evaluation value. If there exist plural upper terminals which are substantially equal in the indicator with a higher priority, one upper terminal may be selected from among these plural upper terminals, based on an indicator with a lower priority.

### (Embodiment 4)

Next, a communication device according to Embodiment 4 of the present invention will be described. The present embodiment is identical to the above embodiment in that the electric field intensity level (RSSI level) of the upper terminal is compared to the predetermined threshold set as the connection condition, except that the communication device of the present embodiment is configured to regulate (make compensation for) the threshold preliminarily based on an installation state of the upper terminal. Hereinafter, the configuration and method different from Embodiment 1 will be mainly described.

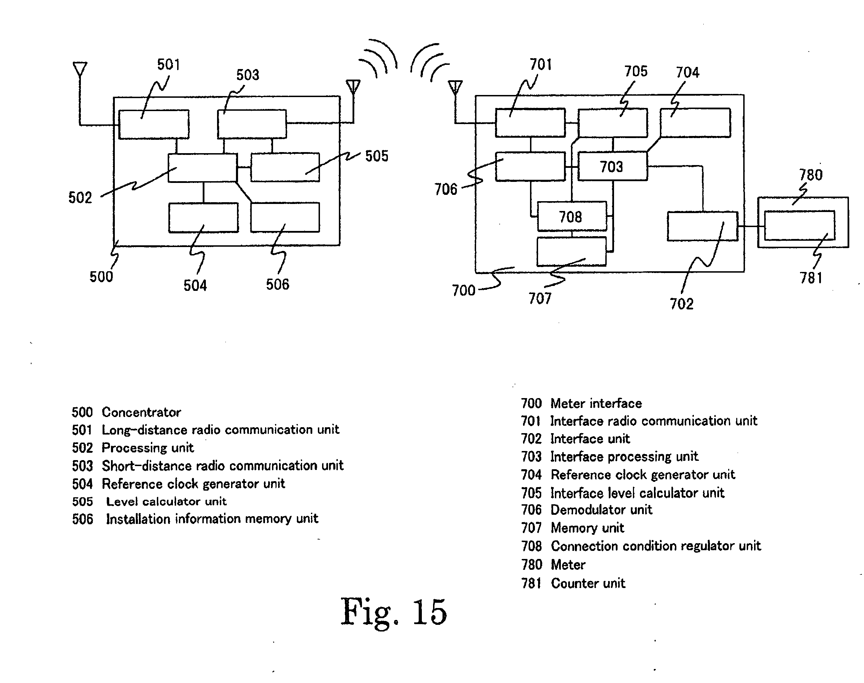

Fig. 15 is a block diagram of a meter interface which is an exemplary communication device of the present invention, and a block diagram of a concentrator which is an upper terminal of the meter interface and constitutes a communication system along with the meter interface. As shown in Fig. 15, the communication system of the present invention comprises a concentrator 500, a meter interface 700 and a meter 780.

The concentrator 500 includes a long-distance radio unit 501, a processing unit 502, a short-distance radio unit 503, a reference clock generator unit 504, and a level calculator unit 505, which are similar in configuration to the long-distance radio unit 101, the processing unit 102, the short-distance radio unit 103, the reference clock generator unit 104, and the level calculator unit 105, respectively, in the concentrator 100 of Embodiment 1. In contrast, in addition to the above, the concentrator 500 of the present embodiment includes an installation information memory unit 506. The installation information memory unit 506 is constituted by a nonvolatile memory, a microcomputer, etc., and stores installation information relating to an installation environment such as an installation elevation of the concentrator 500, information relating to blocking objects surrounding the concentrator 500.

The meter interface 700 includes an interface radio communication unit 701, an interface unit 702, an interface processing unit 703, a reference clock generator unit 704, and an interface level calculator unit 705, which are similar in configuration to the interface radio communication unit 301, the meter interface unit 302, the interface processing unit 303, the reference clock generator unit 304, and the interface level calculator unit 305, respectively in the meter interface 300 of Embodiment 1. In contrast, in addition to the above units, the meter interface 700 of the present embodiment includes a demodulator unit 706, a memory unit 707, and a connection condition regulator unit 708.

The demodulator unit 706 includes a waveform shaping circuit, a detector circuit, a level convertor circuit, a microcomputer, etc., and generates demodulated data according to a predetermined protocol, from data signal-processed in the interface radio communication unit 701.

The memory unit 707 is constituted by a nonvolatile memory, a microcomputer, etc., and stores a threshold (standard connection condition value) of a signal level (electric field intensity level, or RSSI level) to be ensured in the radio communication performed between the meter interface 700 and the concentrator 500.

The connection condition regulator unit 708 is constituted by a microcomputer, etc.. After the interface radio unit 701 has received the signal transmitted from the concentrator 500 and the demodulator unit 706 has demodulated the signal to obtain the installation information contained in the signal, the connection condition regulator unit 708 regulates (adjusts) a standard connection condition value stored in the memory unit 707 based on the installation information.

The meter 780 has a configuration similar to that of the meter 380 of Embodiment 1, and includes a counter unit 781 having a configuration similar to that of the counter unit 381.

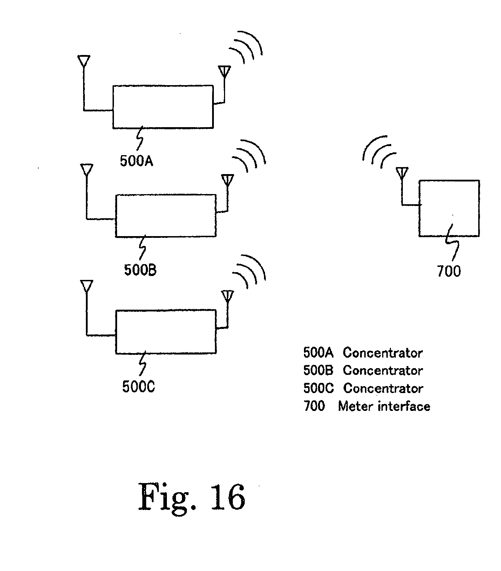

Next, a description will be given of a procedure for searching the concentrator 500 which should perform communication with the meter interface 700 of Fig. 15, which procedure is performed by the meter interface 700, with reference to Fig. 16. Note that the communication scheme used between the meter interface 700 and the concentrator 500, and the content of the communication signal transmitted and received between the meter interface 700 and the concentrator 500 are similar to those of Embodiment 1 described with reference to Figs. 2 to 5.

Fig. 16 is a schematic view showing a configuration of a communication system of the present embodiment, including plural concentrators and one meter interface. In the exemplary environment shown in Fig. 16, three concentrators 500A ∼ 500C as the concentrator 500 and one meter interface 700 are installed. A description will be given of a method of searching one concentrator with which the meter interface 700 performs communication, which method is performed by the meter interface 700, in such an environment.

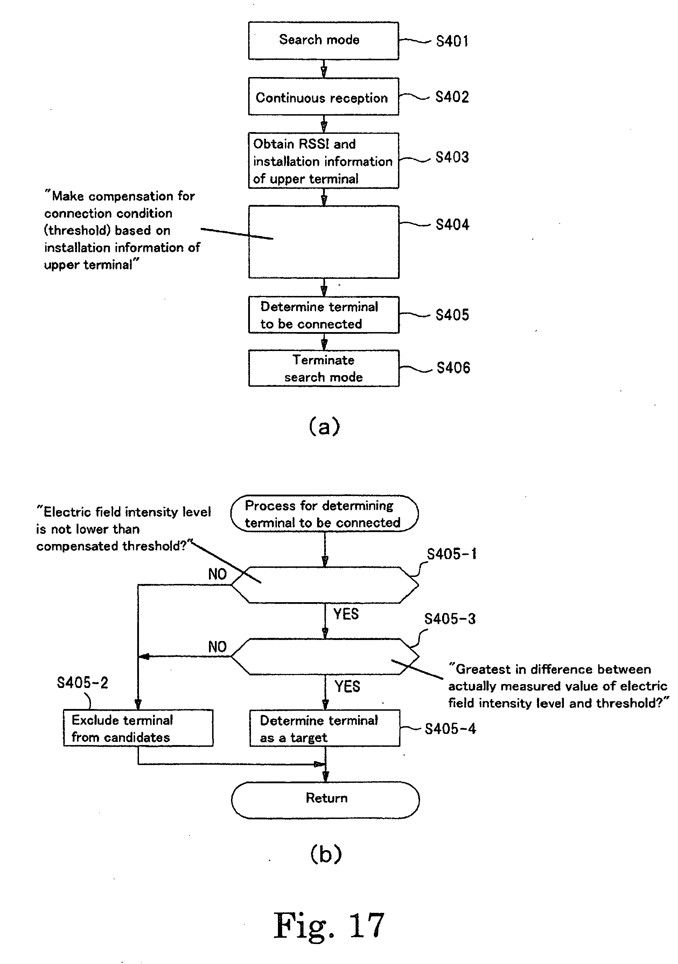

Fig. 17(a) is a flowchart showing the sequence according to which the meter interface 700 of Fig. 16 searches the concentrator to be connected to the meter interface 700, and Fig. 17(b) is a flowchart showing a detailed content of a process for determining the terminal to be connected (S405), in the sequence of Fig. 17(a). Now, a description will be given of the procedure of searching the concentrator to be connected to the meter interface 700, which procedure is performed by the meter interface 700, with reference to Fig. 17(a).

Initially, the meter interface 700 shifts at a predetermined timing to a mode (search mode) in which the meter interface 700 searches a concentrator to be connected to the meter interface 700, the mode being different from a communication mode in which a normal meter reading value, data of an abnormality of a flow rate, and others are transmitted and received (S401). The predetermined timing may be suitably set, as in the manner as described in Embodiment 1. Entering the search mode, the meter interface 700 causes the interface radio communication unit 701 to receive the reference signal continuously for a predetermined period of time (S402).

During the state where the reference signal is received continuously, the interface radio communication unit 701 of the meter interface 700 receives the reference signal from each concentrator on a regular basis, and the interface level calculator unit 705 of the meter interface 700 converts the reference signal into RSSI level. In this way, the meter interface 700 obtains the electric field intensity level between the concentrator and the meter interface 700. Concurrently with this, the demodulator unit 706 demodulates the reference signal transmitted from each of the concentrators to obtain its installation information for each concentrator. As used herein, the "installation information" refers to information relating to an environment in which the corresponding concentrator is installed, and may include an elevation at which the concentrator is installed, presence/absence of blocking objects surrounding the concentrator, the kind of the blocking objects if any, and so on, which are used to determine whether a communication environment of the concentrator is good or bad. In this way, if the meter interface 700 can receive the reference signals from the plural concentrators, it obtains the electric field intensity level and the installation information of each concentrator (S403).

Then, the meter interface 700 makes compensation for the connection condition (i.e.., threshold of the electric field intensity level) of each of the concentrators from which the meter interface 700 has received the reference signals, based on the installation information of each concentrator obtained in step S403 (S404). Then, the meter interface 700 determines (decides) a concentrator to be actually connected to the meter interface 700 (S405), based on the compensated connection conditions (thresholds) and the RSSI levels obtained in step S403. When the meter interface 700 finishes determining the concentrator to be connected to the meter interface 700, in step S405, the meter interface 700 terminates the search mode (S406).

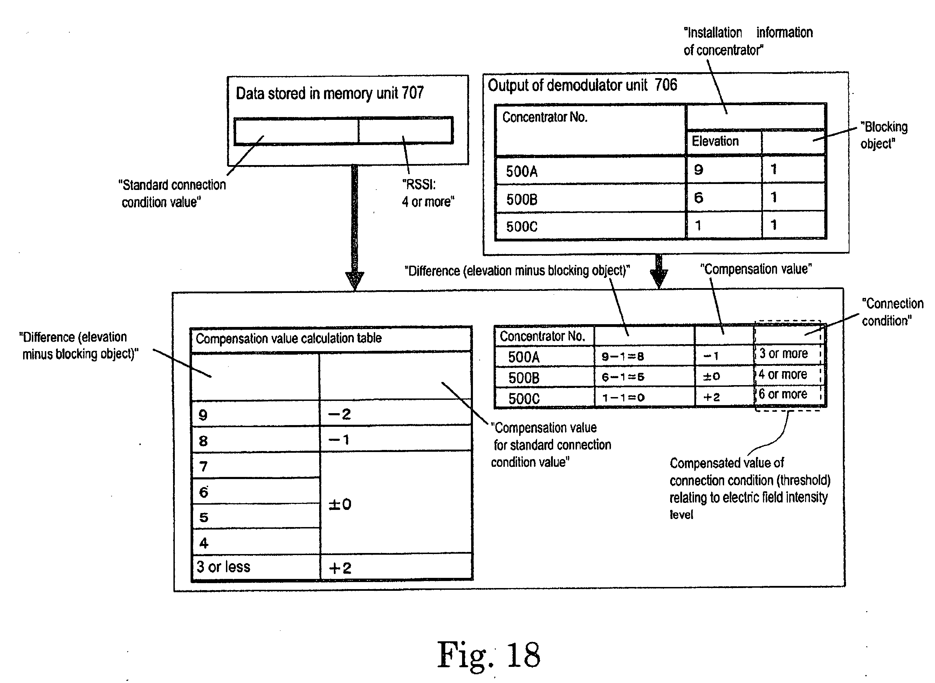

Now, a description will be given of the compensation process in step S404, i.e., a process for making compensation for the condition (connection condition, i.e., threshold) relating to the electric field intensity level) based on which it is determined which of the concentrators the meter interface 700 is to be connected to, based on the installation information of the concentrator. In description with reference to Fig. 18, it is supposed that the standard connection condition value "4" is stored in the memory unit 707 of the meter interface 700, as an initial value of the connection condition (threshold).

As shown in Fig. 18, data derived by demodulating the reference signals from the concentrators 500A - 500C contain the installation information of the concentrators, respectively. Fig. 18 shows as exemplary installation information, numeric value information of elevations at which the concentrators are installed, and numeric value information of blocking objects surrounding the concentrators installed. The information of the elevation at which the concentrators are installed (installation elevation information) are expressed in such a manner that a greater numeric value is assigned to an environment in which the concentrator is installed at a higher position, which environment is more advantageous to propagation of an electric wave. The information of the blocking objects are expressed in such a manner that a greater numeric value is assigned to an environment in which a blocking object which attenuates the electric wave more significantly, is present.

The connection condition regulator unit 708 makes compensation for the connection condition (threshold) based on the above standard connection condition value and the installation information. In the present embodiment, the connection condition regulator unit 708 makes compensation for the connection condition (threshold), with reference to a compensation value calculation table (see Fig. 18) which has been created preliminarily and is stored in the connection condition regulator unit 708. The compensation value calculation table contains information such that numeric values indicating the installation information are associated with the compensation values, respectively. To be specific, the compensation value calculation table contains the compensation values which make the connection condition (threshold) of the electric field intensity level lower and easier for a more advantageous (favorable) installation environment of the concentrator, and make it higher and stricter for a less advantageous (worse) installation environment of the concentrator.

For example, in the case of the concentrator 700, the numeric value information of the elevation "9," and the blocking object "1" are obtained from the concentration installation information. The connection condition regulator unit 708 calculates a difference in numeric value between the elevation and the blocking object, to derive "8," and selects the compensation value " - 1" with reference to the compensation value calculation table. As a result of this, the connection condition (threshold) used to determine whether or not to connect the concentrator 500A to the meter interface 700 is "3" which is derived by adding " - 1" to the standard connection condition value "4" (subtracting "1" from the standard connection condition value "4"). That is, since the installation environment of the concentrator 500A is relatively advantageous (favorable or better), the connection condition used to determine whether or not to connect the concentrator 500A to the meter interface 700 is made easier.

In the case of the concentrator 500B, the numeric value information of the elevation "6," and the blocking object "1" are obtained from the concentration installation information. The difference between them is "5." The connection condition regulator unit 708 selects "± 0" as a compensation value corresponding to the difference "5," with reference to the compensation value calculation table. This results in a connection condition (threshold) which is not lower than "4" and is equal to the standard connection condition value.

In the case of the concentrator 500C, the numeric value information of the elevation "1," and the blocking object "1" are obtained from the concentration installation information. The difference between them is "0." The connection condition regulator unit 708 selects "+2" as a compensation value corresponding to the difference "0," with reference to the compensation value calculation table. By adding "2" to the standard connection condition value "4," "6" is derived as the connection condition (threshold). That is, since the installation environment of the concentrator 500C is relatively bad, the connection condition used to determine whether or not to connect the concentrator 500C to the meter interface 700 is made stricter.

Next, a detailed description will be given of the process for determining the terminal to be connected in step S405, which process is performed using the connection condition (threshold) compensated as described above.

As shown in Fig. 17(b), the interface processing unit 703 of the meter interface 700 compares the electric field intensity level of the reference signal received from each concentrator, to the compensated threshold, to determine whether or not the electric field intensity level is not lower than the compensated threshold (S405-1). If it is determined that the electric field intensity level is lower than the compensated threshold (S405-1: NO), the interface processing unit 703 of the meter interface 700 excludes that concentrator from candidates which may be allowed to be connected to the meter interface 700 (S405-2). On the other hand, if it is determined that the electric field intensity level is not lower than the compensated threshold (S405-1:YES), the interface processing unit 703 of the meter interfaces 700 compares the magnitude of the difference between each electric field intensity level and the compensated threshold, among the concentrators having electric field intensity levels which are not lower than the threshold.

To be specific, the interface processing unit 703 of the meter interfaces 700 determines whether or not the difference between the electric field intensity level and the compensated threshold is greatest, in comparison with those of another concentrators (S405-3). If it is determined that the difference is not greatest (S405-3: NO), the interface processing unit 703 of the meter interfaces 700 excludes that concentrator from candidates (S405-2), while if it is determined that the difference is greatest (S405-3: YES), the interface processing unit 703 of the meter interfaces 700 determines (decides) that concentrator as a target.

In the manner as described above, the meter interface 700 determines the concentrator to be connected to the meter interface 700 based on the electric field intensity levels and the compensated thresholds (S405). Note that if the meter interface 700 can receive the reference signal from only one concentrator, the determination process of step S405-3 may be omitted from the flowchart of Fig. 17(b). In this case, if a result of determination in step S405-1 is "YES," then the process may go to step S405-4.

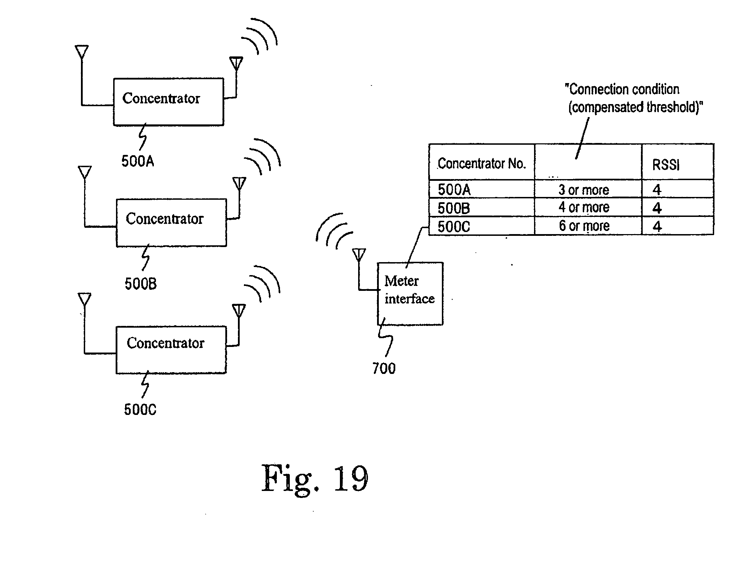

Next, a description will be given of a process for determining a target to be actually connected to the meter interface 700, from among the concentrators 500A - 500C, which process is performed by the meter interface 700, based on the connection conditions (thresholds) of the concentrators 500A ∼ 500C calculated (made compensation for) in the connection condition regulator unit 708, with reference to Fig. 19.

Like the communication system shown in Fig. 16, in the example of Fig. 19, three concentrators 500A ∼ 500C transmit the reference signals to one meter interface 700. Fig. 19 shows the numeric values of the compensated connection conditions (thresholds) which are derived with reference to Fig. 18, and the RSSI levels calculated from the reference signals received.

As shown in Fig. 19, RSSI levels calculated by the meter interface 700, from the reference signals transmitted from the concentrators 500A ∼ 500C are all "4." The meter interface processing unit 703 compares the RSSI levels to the compensated connection conditions (thresholds), respectively, and excludes the concentrator 500C from the candidates, because the RSSI level "4" is not higher than the compensated threshold "6." By comparison, the RSSI level of the concentrator 500A and the RSSI level of the concentrator 500B are not lower than the corresponding compensated thresholds, respectively. In the present embodiment, if there exist plural concentrators having RSSI levels which are not lower than the compensated thresholds, the meter interface processing unit 703 selects as a target a concentrator which is greatest in the difference between the RSSI level (actually measured value) and the corresponding compensated threshold (S405-3 in Fig. 17(b)). Therefore, the meter interface 700 determines (decides) the concentrator 500A as a target.

As described above, the meter interface 700 of the present embodiment searches the concentrator to be connected to the meter interface 700 in such a manner that the electric field intensity level (RSSI level) calculated from the reference signal transmitted from the concentrator is compared to the connection condition (threshold) derived by making compensation for the predetermined standard connection condition value, based on the installation information of the concentrator. This makes it possible to ensure high communication robustness between even communication devices (e.g., meter interface and concentrator) installed on a fixed manner.

By searching the communication route using the data of the reference signal transmitted from the upper terminal on a regular basis, a suitable communication route can be constructed using only the currently installed communication devices in a state where all of the terminals constituting the communication system are not installed. As a result, the system can be constructed with improved flexibility.

Moreover, the above method may be applied in the same manner to even a case where a repeater serving as a relay joins in the communication performed between the concentrator and the meter interface, and an upper terminal to be connected is determined (decided). To be specific, by assuming that the concentrator is the upper terminal, and the repeater is the lower terminal and configured as the communication device of the present invention, the repeater can determine the concentrator to be connected to the repeater, using the above method. In the same manner, assuming that the repeater is the upper terminal and the meter interface is the lower terminal, the meter interface can determine the repeater to be connected to the meter interface, using the above method.

### (Embodiment 5)

Next, a description will be given of a route searching method performed between a meter interface and a repeater, or between a repeater and a concentrator, in a communication system including concentrators, repeaters, and meter interfaces. In particular, in the present embodiment, a description will be given of an example in which the meter interface as a lower terminal searches a communication route between the meter interface and the repeater as the upper terminal, and how to regulate (make compensation for) the connection condition (threshold) relating to the electric field intensity level used to search the route based on the installation information of the meter interface itself (lower terminal) in addition to the installation information of the upper terminal. It is supposed that the concentrator of the present embodiment has a configuration similar to that of Embodiment 1 as shown in Fig. 1.

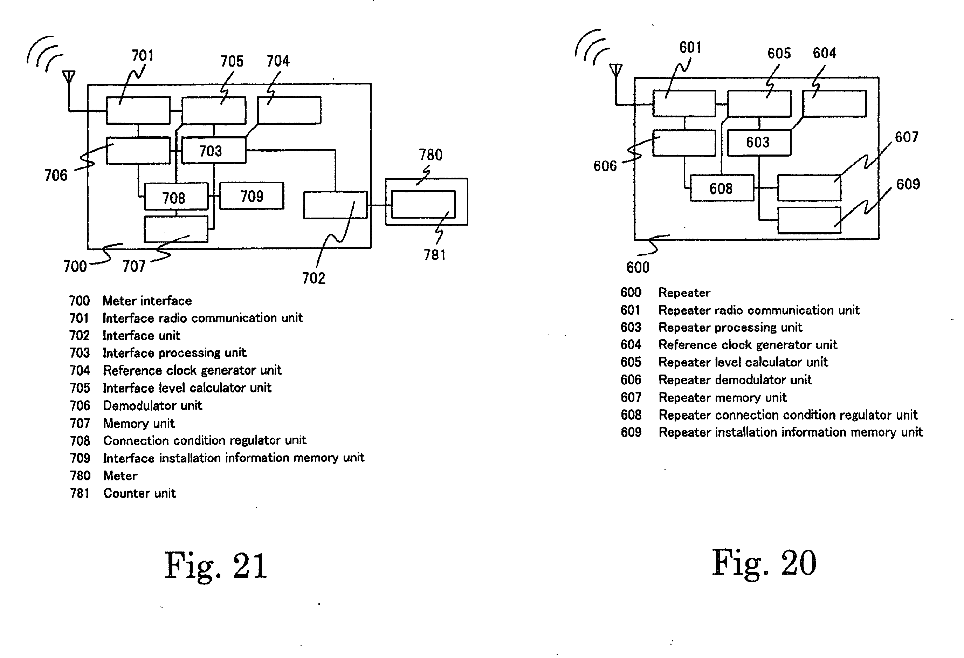

Fig. 20 is a block diagram showing a configuration of the repeater of the present embodiment. As shown in Fig. 20, a repeater 600 includes a repeater radio communication unit 601, a repeater processing unit 603, a reference clock generator unit 604, and a repeater level calculator unit 605, which are similar in configuration to the repeater radio communication unit 201, the repeater processing unit 203, the reference clock generator unit 204, and the repeater level calculator unit 205, respectively in the repeater 200 of Embodiment 2, as shown in Fig. 9

In addition to the above units, the repeater 600 of the present embodiment includes a repeater demodulator unit 606, a repeater memory unit 607, a repeater connection condition regulator unit 608, and a repeater installation information memory unit 609.

Among these units, the repeater demodulator unit 606 demodulates a received signal based on a protocol or specification predetermined among the concentrator, the meter interface and another repeater. The repeater memory unit 607 stores thresholds (standard connection condition values) of electric field intensity levels of the signals to be ensured in radio (wireless) communication performed between concentrators or another repeaters defined as upper terminal, and the repeater 600. The repeater installation memory unit 609 stores information (installation information) indicating an environment in which the repeater 600 (i.e., itself) is installed.

The repeater condition regulator unit 608 regulates (makes compensation for) the connection condition (threshold) stored in the repeater memory unit 607, based on the installation information of the upper terminal obtained by demodulating the signal received from the upper terminal (concentrator or another repeater), and the installation information of the repeater 600 itself stored in the repeater installation information memory unit 609. For example, the repeater condition regulator unit 608 regulates (makes compensation for) the connection condition (threshold) such that the connection condition (threshold) is made easier as the installation environment of the upper terminal and the installation environment of the repeater 600 itself are more advantageous (favorable).

Fig. 21 is a block diagram showing a configuration of the meter interface of the present embodiment. A meter interface 700 of the present embodiment includes the interface radio communication unit 701, the interface unit 702, the interface processing unit 703, the reference clock generator unit 704, the interface level calculator unit 705, the demodulator unit 706, and the memory unit 707, which are similar in configuration to those designated by the same reference numerals as those of Embodiment 4 shown in Fig. 15.

In addition to the above units, the meter interface 700 of Fig. 21 includes a connection condition regulator unit 708 and an interface installation information memory unit 709. The interface installation information memory unit 709 contains the information (installation information) indicating an environment in which the meter interface 700 (i.e., itself) is installed. The connection condition regulator unit 708 of the present embodiment regulates (makes compensation for) the connection condition (threshold) stored in the memory unit 707, based on the installation information of the upper terminal derived by demodulating the signal received from the upper terminal (concentrator or repeater) and the installation information of the meter interface 700 itself stored in the interface installation information memory unit 709. For example, the connection condition regulator unit 708 regulates (makes compensation for) the connection condition (threshold) such that the connection condition (threshold) is made easier as the installation environment of the upper terminal and the installation information of the meter interface 700 itself are more advantageous (favorable).

As the "installation information" stored in the repeater installation information memory unit 609 and the "installation information" stored in the interface installation information memory unit 709, for example, the "installation evaluation values" described with reference to Fig. 12 in Embodiment 2 may be used.

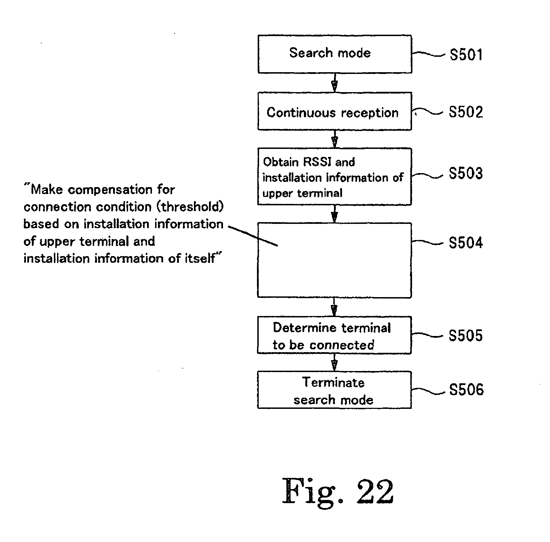

Fig. 22 is a flowchart showing a sequence according to which the meter interface 700 searches a repeater to be connected to the meter interface 700, from among plural repeaters. Hereinafter, a description will be given of a case where the meter interface is connected to the repeater as an upper terminal. Note that a similar sequence may be used in a case where a repeater is connected to a concentrator or another repeater as an upper terminal, or a case where a meter interface is connected to a concentrator.

Initially, the meter interface 700 shifts at a predetermined timing to a mode (search mode) in which the meter interface 700 searches a repeater to be connected to the meter interface 700, the mode being different from a communication mode in which a normal meter reading value, data of an abnormality of a flow rate, and others are transmitted and received (S501). The predetermined timing may be suitably set in the manner as described in Embodiment 1. Entering the search mode, the meter interface 700 causes the interface radio communication unit 701 to receive the reference signal continuously for a predetermined period of time (S502).

During the period of time for which the reference signal is received continuously, in the meter interface 700, the interface radio communication unit 701 receives the reference signal transmitted from each of the repeaters on a regular basis, and the interface level calculator unit 705 converts the reference signal into RSSI level, thereby obtaining electric field intensity level between the repeater and the meter interface 700. Concurrently with this, the signal transmitted from each repeater is demodulated, to obtain the installation information (i.e., installation evaluation value) of each repeater. In this way, when the meter interface 700 can receive the reference signals from plural repeaters, it obtains the electric field intensity level and the installation information, corresponding to each of the repeaters (S503).

Then, the connection condition regulator unit 708 of meter interface 700 makes compensation for the connection condition (standard connection condition value, threshold) relating to the electric field intensity level of each of the repeaters from which the meter interface 700 can receive the reference signals, based on the installation information (installation evaluation value) of the repeater obtained in step S503 and the installation information of the meter interface 700 itself stored in the interface installation information memory unit 709 (S504). The meter interface 700 determines (decides) a repeater to be actually connected to the meter interface 700, based on the compensated connection condition and the actually measured value of the electric field intensity level obtained in step S503 (S505). If there exist plural repeaters which satisfy the compensated connection conditions, the meter interface 700 selects a repeater which is greatest in the difference between the compensated connection condition (threshold) and the actually measured value of the electric field intensity level, from among these repeaters. When the meter interface 700 finishes determining the repeater to be connected to the meter interface 700, it terminates the search mode (S506).

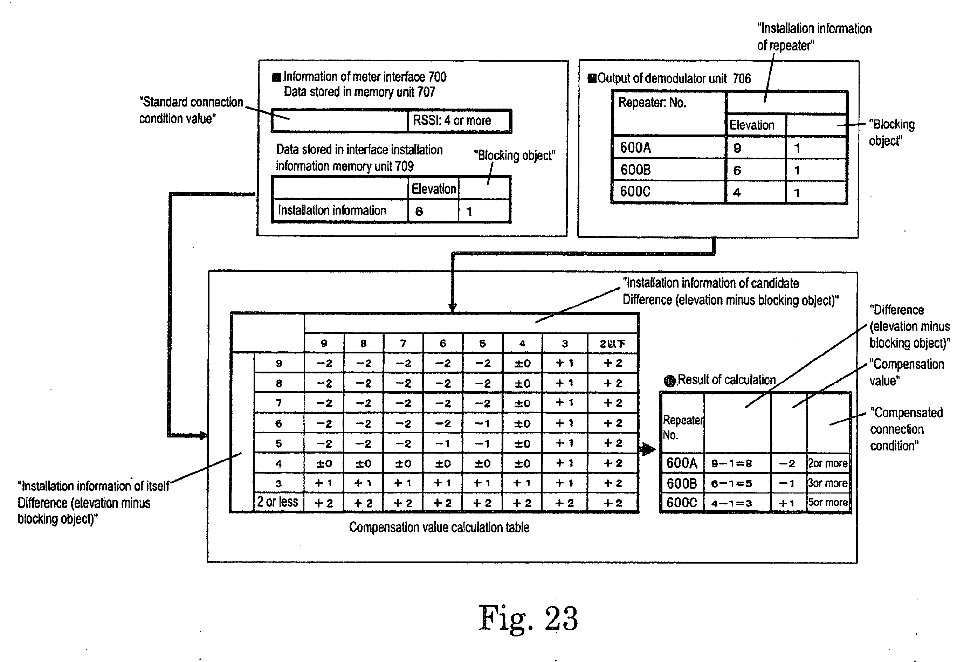

Next, a description will be given of the compensation process in step S504 in the sequence of Fig. 22, with reference to Fig. 23. As shown in Fig. 23, the standard connection condition value (connection condition, threshold) relating to the RSSI level stored in the memory unit 707 of the meter interface 700 before the compensation process is performed, is not lower than "4." The installation information of the meter interface 700, which is stored in the interface installation information memory unit 709, is such that the installation elevation is "6," and the blocking object is "1." It is supposed that the meter interface 700 can receive the reference signals from three repeaters 600A - 600C and these three repeaters 600A - 600C are candidates which may be allowed to be connected to the meter interface 700. Therefore, now, a description will be given of how to make compensation for the standard connection condition values of the three repeaters 600A ∼ 600C.

Initially, the meter interface 700 calculates a difference between the numeric value of the installation elevation and the numeric value of the blocking object, for each of the meter interface 700 and the repeater 600A, based on the installation information of the meter interface 700 and the installation information of the repeater 600A. To be specific, in the case of the meter interface 700, since the installation elevation is "6," and the blocking object is "1," a difference between them is "5. " In the case of the repeater 600A, since the installation elevation is "9," and the blocking object is "1", a difference between them is "8. " Then, the connection condition regulator unit 708 of the meter interface 700 calculates the compensation value of the standard connection condition value of the repeater 600A with reference to compensation value calculation table stored therein.

As shown in Fig. 23, the compensation value calculation table contains information such that compensation values are associated with installation information of lower terminals and installation information of upper terminals, respectively. To be specific, the compensation values are set so that the standard connection condition value is made easier for a more advantageous (favorable) installation environment of the lower terminal, or a more advantageous (favorable) installation environment of the upper terminal.

As described above, the difference value calculated from the installation information of the repeater 600A is "8," and the difference value calculated from the installation information of the meter interface 700 is "5." By referring to the compensation value calculation table based on these values, "- 2" is obtained as the compensation value. Therefore, the standard connection condition value "4" of the RSSI level pre-stored in the meter interface 700 is changed into "2" by compensation, for the repeater 600A. As a result, the repeater 600A may be connected to the meter interface 700 on the condition that the RSSI level of the repeater 600A is not lower than the threshold "2."

In the case of the repeater 600B, since the installation information is such that the installation elevation is "6," and the blocking object is "1", a difference between them is "5. " By referring to the compensation value calculation table based on the difference value "5" of the repeater 600B and the difference value "5" of the meter interface 700, "-1" is selected as the compensation value. Therefore, the standard connection condition value "4" of the RSSI level pre-stored in the meter interface 700 is changed into "3" by compensation, for the repeater 600B.

In the case of the repeater 600C, since the installation information is such that the installation elevation is "4," and the blocking object is "1", a difference between them is "3. " By referring to the compensation value calculation table based on the difference value "3" of the repeater 600C and the difference value "5" of the meter interface 700, "+1" is selected as the compensation value. Therefore, the standard connection condition value "4" of the RSSI level pre-stored in the meter interface 700 is changed into "5" by compensation, for the repeater 600C.

Although the compensation value is selected with reference to the compensation value calculation table stored preliminarily in the connection condition regulator unit 708, for example, a function for calculating the compensation value based on the installation information may be used.

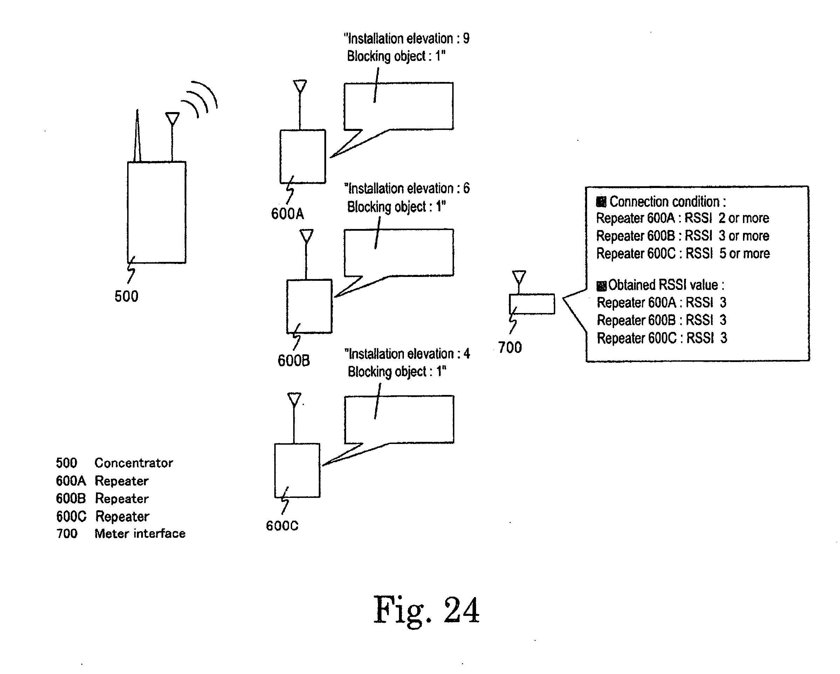

Next, a description will be given of a process for determining a target to be actually connected to the meter interface 700 , based on the connection condition (thresholds) of the repeaters 600A ∼ 600C calculated (made compensation) in the connection condition regulator unit 708, from among the repeaters 600A - 600C. The installation information of the meter interface 700 and the installation information of the repeaters 600A ∼ 600C shown in Fig. 24 are the same as those of Fig. 23.

As shown in Fig. 24, the connection conditions (thresholds) of the repeaters are such that the RSSI level of the repeater 600A is not lower than 2, the RSSI level of the repeater 600B is not lower than 3, and the RSSI level of the repeater 600C is not lower than 5. On the other hand, the RSSI levels actually derived from the reference signals received from the repeaters 600A ∼ 600C are all "3." From this, the repeater 600A and the repeater 600B satisfy the corresponding compensated connection conditions, respectively. As described above, in the present embodiment, if there exist plural repeaters satisfying the corresponding compensated connection conditions, respectively, the meter interface 700 selects a repeater which is greatest in the difference between the compensated connection condition(threshold) and actually measured value of the electric field intensity level. Therefore, the meter interface 700 selects the repeater 600A from among the repeater 600A and the repeater 600B, and decides it as a target.

As described above, in the present embodiment, when the meter interface 700 searches the repeater 600 to be connected to the meter interface 700, it makes compensation for the connection condition (threshold of the electric field intensity level) based on the installation information of the repeater 600 and the installation information of itself (meter interface 700). Thus, improved communication robustness can be achieved as compared to a case where a target is determined based only the magnitude of the temporary electric field intensity level, without considering the installation information. This lessens a need to perform a process for searching a communication route again after the communication route is established once. As a result, a communication amount can be reduced and the amount of current consumption can be lessened in the overall communication system.

Although in the above example, searching of the route between the meter interface 700 and the repeater 600 is performed, a similar configuration and method may be applied to a process for searching a route between repeaters which may have a relation of an upper terminal and a lower terminal, or searching of a route between a concentrator and a meter interface directly connected to the concentrator.

In the present embodiment, if there exist plural upper terminals satisfying the corresponding connection conditions, respectively, an upper terminal which is greatest in the difference between the connection condition (threshold) and actually RSSI level value is decided as a target. Alternatively, another determination criteria may be used. For example, the number of lower terminals already connected to an upper terminal, the number of relay stages in a range from an uppermost terminal to an upper terminal as a candidate, etc., may be used as the determination criteria. If these determination criteria are used, the amount of current consumption and a communication amount can be equalized, among the terminals.

### Industrial Applicability

The present invention is applicable to communication devices used to construct a communication system having improved communication robustness and improved constructibility, and to communication devices used to construct a communication system which can lessen the amount of electric power consumption and a communication amount.

### Reference Signs Lists

- 100, 500: concentrator
- 101, 501: long-distance radio communication unit
- 102, 502: processing unit
- 103, 503: short-distance radio communication unit
- 104, 504: reference clock generator unit
- 105, 505: level calculator unit
- 506: installation information memory unit
- 200, 600: repeater
- 300, 700: meter interface
- 301, 701: interface radio communication unit
- 302, 702: interface unit
- 303, 703: interface processing unit
- 304, 704: reference clock generator unit
- 305, 705: interface level calculator unit
- 706: demodulator unit
- 707: memory unit
- 708: connection condition regulator unit
- 709: interface installation information memory unit

## Claims

1. A radio communication device (300) comprising:
a reception means (301) which receives signals transmitted from plural upper terminals (100);
a signal level calculator means (305) which calculates received signal levels of the signals transmitted from the upper terminals (100) and received in the reception means (301);
a processing means (303) which determines an upper terminal (100) as a target connected to the communication device (300), from among the plural upper terminals (100);
a memory means (707) which stores for each of the upper terminals (100), a threshold compared to a received signal level when it is determined whether or not to connect the communication device (300) to said upper terminal (100); and
a connection condition regulator means (708) which regulates the threshold stored for each of the upper terminals (100), based on upper terminal installation information which relates to an environment in which each of the upper terminals (100) is installed and constitutes the upper terminal environment information,
**characterized in that**:
the processing means (303) is configured to determine the upper terminal (100) as the target connected to the communication device (300), based on the received signal levels of the upper terminals (100) which are calculated in the signal level calculator means (305) and upper terminal environment information relating to communication environments of the upper terminals (100), respectively;
the processing means (303) is configured to determine the upper terminal (100) to be connected to the communication device (300), said upper terminal (100) being selected from among upper terminals (100) in which received signal levels calculated in the signal level calculator means (305) are not lower than the threshold; and
wherein the connection condition regulator means (708) is configured to regulate the threshold stored for each of the upper terminals (100), based on the upper terminal installation information, and communication device installation information relating to an environment in which the communication device (300) itself is installed.

2. The communication device (300) according to claim 1,
wherein the connection condition regulator means (708) is configured to make a threshold easier, the threshold corresponding to an upper terminal (100) satisfying a condition in which the communication device installation information is not lower than a predetermined reference, and the upper terminal installation information is not lower than a predetermined reference.

3. The communication device (300) according to claim 1,
wherein the connection condition regulator means (708) is configured to make a threshold stricter, the threshold corresponding to an upper terminal (100) satisfying a condition in which the communication device installation information is not higher than a predetermined reference, and the upper terminal installation information is not higher than a predetermined reference.

4. The communication device (300) according to claim 1,
wherein the processing means (303) obtains information relating to the number of lower terminals connected to the upper terminals (100), as the upper terminal information, based on the signals transmitted from the upper terminals (100) and received in the reception means (301); and
the processing means (303) is configured to determine an upper terminal (100) being smallest in the number of the lower terminals (300) connected to said upper terminal (100), as the target connected to the communication device (300), said upper terminal (100) being selected from among upper terminals (100) in which received signal levels calculated in the signal level calculator means (305) are not lower than a predetermined threshold.

5. The communication device (300) according to claim 1,
wherein the processing means (303) obtains information relating to the number of relay stages in a range from an uppermost terminal to said upper terminal (100), as the upper terminal information, based on the signals transmitted from the upper terminals (100) and received in the reception means (301); and
the processing means (305) is configured to determine an upper terminal (100) being smallest in the number of the relay stages, as the target connected to the communication device (300), said upper terminal (100) being selected from among upper terminals (100) in which received signal levels calculated in the signal level calculator means (305) are not lower than a predetermined threshold.

6. The communication device (300) according to claim 1,
wherein the connection condition regulator means (708) is configured to regulate a threshold corresponding to an upper terminal (100) in which the upper terminal installation information is not lower than a predetermined reference such that the threshold is made easier.

7. The communication device (300) according to claim 1,
wherein the connection condition regulator means (708) is configured to regulate a threshold corresponding to an upper terminal (100) in which the upper terminal installation information is lower than a predetermined reference such that the threshold is made stricter.

## Patentansprüche

1. Funkkommunikationsvorrichtung (300), die aufweist:
ein Empfangsmittel (301), welches Signale empfängt, die von vielen oberen Anschlüssen bzw. Terminals (100) übertragen wurden;
ein Signalpegelberechnungsmittel (305), welches empfangene Signalpegel der Signale berechnet, die von den oberen Anschlüssen bzw. Terminals (100) übertragen und in dem Empfangsmittel (301) empfangen wurden;
ein Verarbeitungsmittel (303), welches einen oberen Anschluss bzw. ein oberes Terminal (100) als ein Ziel bestimmt, das an die Kommunikationsvorrichtung (300) angeschlossen ist, und zwar aus den vielen oberen Anschlüssen bzw. Terminals (100); und
ein Speichermittel (707), welches für jeden bzw. jedes der oberen Anschlüsse bzw. Terminals (100) einen Schwellenwert speichert, der mit einem empfangenen Signalpegel verglichen wird, wenn es bestimmt ist ob oder ob nicht die Kommunikationsvorrichtung (300) an den oberen Anschluss bzw. das obere Terminal (100) anzuschließen ist;
ein Verbindungsbedingungsreguliermittel (708), welches den Schwellenwert reguliert, der für jeden bzw. jedes der oberen Anschlüsse bzw. Terminals (100) gespeichert ist, und zwar basierend auf Installationsinformation des oberen Anschlusses bzw. Terminals, welche eine Umgebung betrifft bzw. einer Umgebung entspricht, in welcher jeder bzw. jedes der oberen Anschlüsse bzw. Terminals (100) installiert bzw. montiert ist, und die Umgebungsinformation des oberen Anschlusses bzw. Terminals konstituiert bzw. festgelegt oder bildet,
**dadurch gekennzeichnet, dass**:
das Verarbeitungsmittel (303) konfiguriert ist, um den oberen Anschluss bzw. das obere Terminal (100) als das Ziel zu bestimmen, welches an die Kommunikationsvorrichtung (300) angeschlossen ist, und zwar basierend auf den empfangenen Signalpegeln der oberen Anschlüsse bzw. Terminals (100), welche in dem Signalpegelberechnungsmittel (305) berechnet sind bzw. werden, und der Umgebungsinformation des oberen Anschlusses bzw. Terminals, die Kommunikationsumgebungen der oberen Anschlüsse bzw. Terminals (100) betreffen bzw. entsprechen, und zwar jeweilig;
das Verarbeitungsmittel (303) konfiguriert ist, um den oberen Anschluss bzw. das obere Terminal (100) zu bestimmen, um an die Kommunikationsvorrichtung (300) angeschlossen zu werden, wobei der obere Anschluss bzw. das obere Terminal (100) aus den oberen Anschlüssen bzw. Terminals (100) ausgewählt wird, bei welchen die empfangenen Signalpegel, die in den Signalpegelberechnungsmittel (305) berechnet wurden, nicht kleiner bzw. niedriger als der Schwellenwert sind; und
wobei das Verbindungsbedingungsreguliermittel (708) konfiguriert ist, um den Schwellenwert zu regulieren, der für jeden bzw. jedes der oberen Anschlüsse bzw. Terminals (100) gespeichert ist, und zwar basierend auf der Installationsinformation des oberen Anschlusses bzw. Terminals, und Installationsinformation der Kommunikationsvorrichtung, die eine Umgebung betrifft bzw. einer Umgebung entspricht, in welcher die Kommunikationsrichtung (300) selbst installiert bzw. montiert ist.

2. Kommunikationsvorrichtung (300) nach Anspruch 1,
wobei das Verbindungbedingungsreguliermittel (708) konfiguriert ist, um einen Schwellenwert einfacher bzw. leichter zu machen, wobei der Schwellenwert, der zu einem oberen Anschluss bzw. Terminal (100) korrespondiert, eine Bedingung erfüllt, bei welcher die Installationsinformation der Kommunikationsvorrichtung nicht kleiner bzw. niedriger als eine vorbestimmte Referenz bzw. ein vorbestimmter Bezug ist, und die Installationsinformation des oberen Anschlusses bzw. Terminals nicht kleiner bzw. niedriger als eine vorbestimmte Referenz bzw. ein vorbestimmter Bezug ist.

3. Kommunikationsvorrichtung (300) nach Anspruch 1,
wobei das Verbindungsbedingunsreguliermittel (708) konfiguriert ist, um einen Schwellenwert strikter bzw. strenger zu machen, wobei der Schwellenwert, der zu einem oberen Anschluss bzw. Terminal (100) korrespondiert, eine Bedingung erfüllt, bei welcher die Installationsinformation der Kommunikationsvorrichtung nicht höher als eine vorbestimmte Referenz bzw. ein vorbestimmter Bezug ist, und die Installationsinformation des oberen Anschlusses bzw. Terminals nicht höher als eine vorbestimmte Referenz bzw. ein vorbestimmter Bezug ist.

4. Kommunikationsvorrichtung (300) nach Anspruch 1,
wobei das Verarbeitungsmittel (303) Information erhält, die die Anzahl der unteren Anschlüsse bzw. Terminals betrifft bzw. die der Anzahl der unteren Anschlüsse bzw. Terminals entspricht, die an den oberen Anschlüssen bzw. Terminals (100) angeschlossen sind, und zwar als die obere Anschlussinformation bzw. obere Terminalinformation, und zwar basierend auf den Signalen, die von den oberen Anschlüssen bzw. oberen Terminals (100) übertragen und in dem Empfangsmittel (301) empfangen wurden;
das Verarbeitungsmittel (303) konfiguriert ist, um einen oberen Anschluss bzw. ein oberes Terminal (100) zu bestimmen, das das Kleinste bzw. das Niedrigste in der Anzahl bzw. Nummer der unteren Anschlüsse bzw. Terminals (300) ist, die an den obere Anschluss bzw. das obere Terminal (100) angeschlossen sind, und zwar als ein Ziel, das zu der Kommunikationsvorrichtung (300) angeschlossen ist, wobei der obere Anschluss bzw. das obere Terminal (100) aus oberen Anschlüssen bzw. Terminals (100) ausgewählt ist, bei welchen die empfangenen Signalpegel, die in dem Signalpegelberechnungsmittel (305) berechnet wurden, nicht kleiner bzw. geringer oder niedriger als ein vorbestimmter Schwellenwert sind.

5. Kommunikationsvorrichtung (300) nach Anspruch 1,
wobei das Verarbeitungsmittel (303) Information enthält, die die bzw. der Anzahl der Weiterleitungsstufen in einem Bereich von einem obersten Anschluss bzw. Terminal zu dem oberen Anschluss bzw. Terminal (100) betrifft bzw. entspricht, und zwar als die obere Anschlussinformation bzw. obere Terminalinformation, und zwar basierend auf den Signalen, die von den oberen Anschlüssen bzw. Terminals (100) übertragen und in dem Empfangsmittel (301) empfangen wurden; und
das Verarbeitungsmittel (305) konfiguriert ist, um einen oberen Anschluss bzw. ein oberes Terminal (100), das das Kleinste bzw. Niedrigste in der Anzahl bzw. Nummer der Weiterleitungsstufen ist, als das Ziel zu bestimmen, das zu bzw. an der Kommunikationsvorrichtung (300) angeschlossen ist, wobei der obere Anschluss bzw. das obere Terminal (100) aus oberen Anschlüssen bzw. oberen Terminals (100) ausgewählt ist, bei welchen empfangene Signalpegel, die in dem Signalpegelberechnungsmittel (305) berechnet wurden, nicht kleiner bzw. niedriger als ein vorbestimmter Schwellenwert sind.

6. Kommunikationsvorrichtung (300) nach Anspruch 1,
wobei das Verbindungsbedingungsreguliermittel (708) konfiguriert ist, um einen Schwellenwert zu regulieren, der zu einem oberen Anschluss bzw. Terminal (100) korrespondiert, bei welchem die Installationsinformation des oberen Anschlusses bzw. Terminals nicht kleiner bzw. niedriger als eine vorbestimmte Referenz bzw. ein vorbestimmter Bezug ist, so dass der Schwellenwert einfacher bzw. leichter gemacht wird.

7. Kommunikationsvorrichtung (300) nach Anspruch 1,
wobei das Verbindungsbedingungsreguliermittel (708) konfiguriert ist, um einen Schwellenwert zu regulieren, der zu einem oberen Anschluss bzw. Terminal (100) korrespondiert, in bzw. bei welchem die Installationsinformation des oberen Anschlusses bzw. Terminals kleiner bzw. geringer oder niedriger als eine vorbestimmte Referenz bzw. ein vorbestimmter Bezug ist, sodass der Schwellenwert strikter bzw. strenger gemacht ist.

## Revendications

1. Dispositif de radiocommunication (300) comportant :
des moyens de réception (301) lesquels reçoivent des signaux transmis par une pluralité de terminaux supérieurs (100),
des moyens de calcul de niveaux de signaux (305) qui calculent des niveaux de signaux reçus des signaux transmis par les terminaux supérieurs (100) et reçus dans les moyens de réception (301),
des moyens de traitement (303) qui déterminent un terminal supérieur (100) en tant qu'une cible reliée au dispositif de communication (300), parmi la pluralité de terminaux supérieurs (100),
des moyens de mémoire (707) qui mémorisent pour chacun des terminaux supérieurs (100), un seuil comparé à un niveau de signal reçu lorsqu'il est déterminé s'il faut oui ou non relier le dispositif de communication (300) audit terminal supérieur (100), et
des moyens de régulation de conditions de connexion (708) qui régulent le seuil mémorisé pour chacun des terminaux supérieurs (100), sur la base d'informations d'installation de terminal supérieur qui se rapportent à un environnement dans lequel chacun des terminaux supérieurs (100) est installé et constitue les informations d'environnement de terminal supérieur,
**caractérisé en ce que** :
les moyens de traitement (303) sont configurés pour déterminer le terminal supérieur (100) en tant que la cible reliée au dispositif de communication (300), sur la base des niveaux de signaux reçus des terminaux supérieurs (100) qui sont calculés dans les moyens de calcul de niveaux de signaux (305) et des informations d'environnement de terminal supérieur concernant des environnements de communication des terminaux supérieurs (100), respectivement,
les moyens de traitement (303) sont configurés pour déterminer le terminal supérieur (100) à relier au dispositif de communication (300), ledit terminal supérieur (100) étant sélectionné parmi les terminaux supérieurs (100) dans lesquels des niveaux de signaux reçus calculés dans les moyens de calcul de niveaux de signaux (305) ne sont pas inférieurs au seuil, et
dans lequel les moyens de régulation de conditions de connexion (708) sont configurés pour réguler le seuil mémorisé pour chacun des terminaux supérieurs (100), sur la base des informations d'installation de terminal supérieur, et des informations d'installation de dispositif de communication concernant un environnement dans lequel le dispositif de communication (300) lui-même est installé.

2. Dispositif de communication (300) selon la revendication 1,
dans lequel les moyens de régulation de conditions de connexion (708) sont configurés pour assouplir un seuil, le seuil correspondant à un terminal supérieur (100) satisfaisant à une condition dans laquelle les informations d'installation de dispositif de communication ne sont pas inférieures à une référence prédéterminée, et les informations d'installation de terminal supérieur ne sont pas inférieures à une référence prédéterminée.

3. Dispositif de communication (300) selon la revendication 1,
dans lequel les moyens de régulation de conditions de connexion (708) sont configurés pour durcir un seuil, le seuil correspondant à un terminal supérieur (100) satisfaisant à une condition dans laquelle les informations d'installation de dispositif de communication ne sont pas supérieures à une référence prédéterminée, et les informations d'installation de terminal supérieur ne sont pas supérieures à une référence prédéterminée.

4. Dispositif de communication (300) selon la revendication 1,
dans lequel les moyens de traitement (303) obtiennent des informations concernant le nombre de terminaux inférieurs reliés aux terminaux supérieurs (100), en tant qu'informations de terminaux supérieurs, sur la base des signaux transmis par les terminaux supérieurs (100) et reçus dans les moyens de réception (301), et
les moyens de traitement (303) sont configurés pour déterminer un terminal supérieur (100) étant le plus petit dans le nombre des terminaux inférieurs (300) reliés audit terminal supérieur (100), en tant que la cible reliée au dispositif de communication (300), ledit terminal supérieur (100) étant sélectionné parmi des terminaux supérieurs (100) dans lesquels des niveaux de signaux reçus calculés dans les moyens de calcul de niveaux de signaux (305) ne sont pas inférieurs à un seuil prédéterminé.

5. Dispositif de communication (300) selon la revendication 1,
dans lequel les moyens de traitement (303) obtiennent des informations concernant le nombre d'étages de relais selon un choix allant d'un terminal le plus élevé jusqu'audit terminal supérieur (100), en tant qu'informations de terminal supérieur, sur la base des signaux transmis par les terminaux supérieurs (100) et reçus dans les moyens de réception (301), et
les moyens de traitement (305) sont configurés pour déterminer un terminal supérieur (100) étant le plus petit dans le nombre des étages de relais, en tant que la cible reliée au dispositif de communication (300), ledit terminal supérieur (100) étant sélectionné parmi des terminaux supérieurs (100) dans lesquels des niveaux de signaux reçus calculés dans les moyens de calcul de niveau de signaux (305) ne sont pas inférieurs à un seuil prédéterminé.

6. Dispositif de communication (300) selon la revendication 1,
dans lequel les moyens de régulation de conditions de connexion (708) sont configurés pour réguler un seuil correspondant à un terminal supérieur (100) dans lequel les informations d'installation de terminal supérieur ne sont pas inférieures à une référence prédéterminée de sorte que le seuil est assoupli.

7. Dispositif de communication (300) selon la revendication 1,
dans lequel les moyens de régulation de conditions de connexion (708) sont configurés pour réguler un seuil correspondant à un terminal supérieur (100) dans lequel les informations d'installation de terminal supérieur sont inférieures à une référence prédéterminée de sorte que le seuil est durci.
